# EUROPEAN PATENT APPLICATION

(11) **EP 4 270 518 A1**
(43) Date of publication of application: **01.11.2023**
(21) Application number: 21910768.7
(22) Date of filing: 21.12.2021
(51) Int. Cl.: H01M 4/13, H01M 10/0587, H01M 50/105, H01M 50/184, H01M 50/538

(54) **NONAQUEOUS ELECTROLYTE SECONDARY BATTERY**

(30) Priority: 23.12.2020 JP 2020213904; 03.12.2021 JP 2021197208
(71) Applicant: Panasonic Energy Co., Ltd., Osaka 570-8511 (JP)
(72) Inventor: YOSHIDA, Satoshi, Kadoma-shi, Osaka 571-0057 (JP); OKUDA, Kazuhiro, Kadoma-shi, Osaka 571-0057 (JP); FURUKAWA, Shinya, Kadoma-shi, Osaka 571-0057 (JP); TAMAKI, Hiyoshi, Kadoma-shi, Osaka 571-0057 (JP)
(74) Representative: Novagraaf International SA
(86) International application number: PCT/JP2021/047281
(87) International publication number: WO 2022/138625

(57) **Abstract**

According to the present invention, a battery (1) is provided with a laminate film outer package (5) which is configured by bonding film materials; and a flat electrode body (10) which is contained in the laminate film outer package (5). According to the present invention, a positive electrode has a positive electrode non-coated part, in which a positive electrode mixture layer is not present and a positive electrode core body is exposed, in a midway in the longitudinal direction; and a negative electrode has a negative electrode non-coated part, in which a negative electrode mixture layer is not present and a negative electrode core body is exposed, in a midway in the longitudinal direction. The battery (1) is provide with: a positive electrode tab (15) which is bonded and electrically connected to the positive electrode non-coated part; and a negative electrode tab (20) which is bonded and electrically connected to the negative electrode non-coated part. The positive electrode tab (15) and the negative electrode tab (20) generally pass through the center of the flat electrode body (10) in the thickness direction, while being positioned on the same side with respect to a virtual plane that is generally perpendicular to the thickness direction of the flat electrode body.

## Description

### TECHNICAL FIELD

The present disclosure relates to a non-aqueous electrolyte secondary battery including a laminated film outer housing formed by joining laminate film members.

### BACKGROUND

In the related art, there are known secondary batteries such as that described in Patent Literature 1. This secondary battery is a laminated form lithium ion secondary battery, and includes a flat-shape electrode assembly formed by winding a positive electrode of an elongated shape and a negative electrode of an elongated shape, which oppose each other with a separator of an elongated shape therebetween, in a flat shape, and a laminated film outer housing which houses the flat-shape electrode assembly. In this secondary battery, a positive electrode tab extends from a positive electrode portion which is present around a center of the flat-shape electrode assembly in a thickness direction toward an upper side in a height direction, and a negative electrode tab extends from a negative electrode portion which is present around a center of the flat-shape electrode assembly in the thickness direction toward an upper side in the height direction. Each of the positive electrode tab and the negative electrode tab is bent in a thickness direction of the laminated film outer housing, and is then further bent in a height direction at a back surface side of the laminated film outer housing. Each of the positive electrode tab and the negative electrode tab extends along the back surface after being bent in the height direction, and extends via a thermal welding portion of the laminated film outer housing to the outside of the battery.

### CITATION LIST

### PATENT LITERATURE

PATENT LITERATURE 1: JP 2004-349243 A

### SUMMARY

### TECHNICAL PROBLEM

In the related art, in the secondary battery including a flat-shape electrode assembly and a laminated film outer housing, due to reasons that intermittent coating of a mixture layer onto a core of an elongated shape is not easy, or concerns of short-circuiting due to a higher density of the electrode assembly in the thickness direction when the wound electrode assembly is press-molded in the flat shape, each of the positive electrode tab and the negative electrode tab is joined to an end, in a longitudinal direction, of the core of the elongated shape. Because of this, in the secondary battery of Patent Literature 1, each of the positive electrode tab and the negative electrode tab extends from an electrode portion which is present near a center of the flat-shape electrode assembly in the thickness direction.

Under such circumstances, in the secondary battery of Patent Literature 1, the positive electrode tab and the negative electrode tab protruding from a region near the center of the flat-shape electrode assembly in the thickness direction must be extended, in the thickness direction, a long distance from a center side of the laminated film outer housing in the thickness direction to the back surface side. Because of this, it is difficult to position the positive electrode tab and the negative electrode tab, resulting in difficulty in welding the positive electrode tab ad the negative electrode tab to the laminated film outer housing. In addition, because each of the positive electrode tab and the negative electrode tab is fixed at the end, in the longitudinal direction, of the core of the elongated shape, it is not possible to provide the mixture layer at the end, in the longitudinal direction, of the core of the elongated shape, resulting in difficulties in increasing an area on which the mixture layer is coated, and in increasing the capacity.

An advantage of the present disclosure lies in provision of a non-aqueous electrolyte secondary battery including a laminated film outer housing, and which enables easy positioning of the positive electrode tab and the negative electrode tab, and also enables an increase in the capacity.

### SOLUTION TO PROBLEM

In order to solve the problem described above, according to one aspect of the present disclosure, there is provided a non-aqueous electrolyte secondary battery including: a laminated film outer housing formed by joining film members; and a flat-shape electrode assembly housed in the laminated film outer housing, and formed by winding a positive electrode of an elongate shape and a negative electrode of an elongated shape, which oppose each other with a separator of an elongated shape therebetween, in a flat shape, wherein the positive electrode includes a positive electrode core of an elongated shape, and a positive electrode mixture layer provided over the positive electrode core, and includes a positive electrode non-coated portion at a midway in a longitudinal direction of the positive electrode, where the positive electrode mixture layer is not present and the positive electrode core is exposed, and the negative electrode includes a negative electrode core of an elongated shape, and a negative electrode mixture layer provided over the negative electrode core, and includes a negative electrode non-coated portion at a midway in a longitudinal direction of the negative electrode, where the negative electrode mixture layer is not present and the negative electrode core is exposed, the non-aqueous electrolyte secondary battery further includes: a positive electrode tab joined to and electrically connected to the positive electrode non-coated portion; and a negative electrode tab joined to and electrically connected to the negative electrode non-coated portion, and the positive electrode tab and the negative electrode tab are positioned on a same side with respect to a virtual plane which passes approximately a center of the flat-shape electrode assembly in a thickness direction and which is approximately orthogonal to the thickness direction.

According to another aspect of the present disclosure, there is provided a non-aqueous electrolyte secondary battery including: a laminated film outer housing formed by joining film members; and a flat-shape electrode assembly housed in the laminated film outer housing, and formed by winding a positive electrode of an elongated shape and a negative electrode of an elongated shape, which oppose each other with a separator of an elongated shape therebetween, in a flat shape, wherein the positive electrode includes a positive electrode core of an elongated shape, and a positive electrode mixture layer provided over the positive electrode core, and includes a positive electrode non-coated portion at a midway in a longitudinal direction of the positive electrode, where the positive electrode mixture layer is not present and the positive electrode core is exposed, and the negative electrode includes a negative electrode core of an elongated shape and a negative electrode mixture layer provided over the negative electrode core, and includes a negative electrode non-coated portion at an outermost circumferential portion in a longitudinal direction of the negative electrode, where the negative electrode mixture layer is not present and the negative electrode core is exposed, the non-aqueous electrolyte secondary battery further includes: a positive electrode tab joined to and electrically connected to the positive electrode non-coated portion; and a negative electrode tab joined to and electrically connected to the negative electrode non-coated portion, and the positive electrode tab and the negative electrode tab are positioned on a same side with respect to a virtual plane which passes approximately a center of the flat-shape electrode assembly in a thickness direction and which is approximately orthogonal to the thickness direction.

According to another aspect of the present disclosure, there is provided a non-aqueous electrolyte secondary battery including: a laminated film outer housing formed by joining film members; and a flat-shape electrode assembly housed in the laminated film outer housing, and formed by winding a positive electrode of an elongated shape and a negative electrode of an elongated shape, which oppose each other with a separator of an elongated shape therebetween, in a flat shape, wherein the positive electrode includes a positive electrode core of an elongated shape, and a positive electrode mixture layer provided over the positive electrode core, and includes a positive electrode non-coated portion at a midway in a longitudinal direction of the positive electrode, where the positive electrode mixture layer is not present and the positive electrode core is exposed, and the negative electrode includes a negative electrode core of an elongated shape, and a negative electrode mixture layer provided over the negative electrode core, and includes a negative electrode non-coated portion at an innermost circumferential portion in a longitudinal direction of the negative electrode, where the negative electrode mixture layer is not present and the negative electrode core is exposed, and the non-aqueous electrolyte secondary battery further includes: a positive electrode tab joined to and electrically connected to the positive electrode non-coated portion; and a negative electrode tab joined to and electrically connected to the negative electrode non-coated portion.

### ADVANTAGEOUS EFFECTS

According to the non-aqueous electrolyte secondary battery of an aspect of the present disclosure, the positive electrode tab and the negative electrode tab can be easily positioned, and the capacity can be easily increased.

### BRIEF DESCRIPTION OF DRAWINGS

FIG. 1 is a perspective diagram of a non-aqueous electrolyte secondary battery according to a first embodiment of the present disclosure.
FIG. 2 is a front view of the above-described battery.
FIG. 3a is a diagram for explaining a method of manufacturing a laminated film outer housing.
FIG. 3b is a diagram for explaining a method of manufacturing the laminated film outer housing.
FIG. 4a is a schematic front view of a positive electrode of an elongated shape before being wound, viewed from one side in a thickness direction thereof.
FIG. 4b is a schematic front view of a negative electrode of an elongated shape before being wound, viewed from one side in a thickness direction thereof.
FIG. 5 is a plan view of a flat-shape electrode assembly of the above-described battery, viewed from one side in a height direction.
FIG. 6 is a schematic partial cross-sectional diagram of the above-described battery, cut in a cross section passing through the negative electrode tab and including a thickness direction and a height direction.
FIG. 7 is a schematic cross-sectional diagram of a tab shaping apparatus which can be used to shape a tip side portion of a tab.
FIG. 8a is a diagram for explaining a method of manufacturing a laminated film outer housing of a battery of a referential example.
FIG. 8b is a diagram for explaining a method of manufacturing the laminated film outer housing of the battery of the referential example.
FIG. 9a is a schematic front view corresponding to FIG. 4a and showing a positive electrode of the battery of the referential example.
FIG. 9b is a schematic front view corresponding to FIG. 4b and showing a negative electrode of the battery of the referential example.
FIG. 10 is a plan view corresponding to FIG. 5 and showing a flat-shape electrode assembly of the battery of the referential example.
FIG. 11 is a schematic partial cross-sectional diagram corresponding to FIG. 6 and showing the battery of the referential example.
FIG. 12 is a schematic cross-sectional diagram of a tab shaping apparatus which can be used to shape a tip side portion of a tab of the battery of the referential example.
FIG. 13a is a front view of a battery having a sealing deficiency due to a welding resin being positioned at an outer side than a sealing location.
FIG. 13b is a front view of a battery having a sealing deficiency due to the welding resin being positioned at an inner side than the sealing location.
FIG. 14a is a schematic front view of a positive electrode of an elongated shape before being wound in a non-aqueous electrolyte secondary battery according to a second embodiment of the present disclosure, viewed from one side in a thickness direction thereof (an outer side in a radial direction of a flat-shape electrode assembly).
FIG. 14b is a schematic front view of the positive electrode of the elongated shape before being wound in the non-aqueous electrolyte secondary battery according to the second embodiment of the present disclosure, viewed from the other side in the thickness direction thereof (an inner side in the radial direction of the flat-shape electrode assembly).
FIG. 14c is a schematic front view of a negative electrode of an elongated shape before being wound in the non-aqueous electrolyte secondary battery according to the second embodiment of the present disclosure, viewed from one side in a thickness direction thereof (the outer side in the radial direction of the flat-shape electrode assembly).
FIG. 14d is a schematic front view of the negative electrode of the elongated shape before being wound in the non-aqueous electrolyte secondary battery according to the second embodiment of the present disclosure, viewed from the other side in the thickness direction thereof (the inner side in the radial direction of the flat-shape electrode assembly).
FIG. 15 is a plan view of the flat-shape electrode assembly according to the second embodiment of the present disclosure, viewed from one side in a height direction.
FIG. 16a is a schematic front view of a positive electrode of an elongated shape before being wound in a non-aqueous electrolyte secondary battery according to a third embodiment of the present disclosure, viewed from one side in a thickness direction thereof (an outer side in a radial direction of a flat-shape electrode assembly).
FIG. 16b is a schematic front view of the positive electrode of the elongated shape before being wound in the non-aqueous electrolyte secondary battery according to the third embodiment of the present disclosure, viewed from the other side in the thickness direction thereof (an inner side in the radial direction of the flat-shape electrode assembly).
FIG. 16c is a schematic front view of a negative electrode of an elongated shape before being wound in the non-aqueous electrolyte secondary battery according to the third embodiment of the present disclosure, viewed from one side in a thickness direction thereof (the outer side in the radial direction of the flat-shape electrode assembly).
FIG. 16d is a schematic front view of the negative electrode of the elongated shape before being wound in the non-aqueous electrolyte secondary battery according to the third embodiment of the present disclosure, viewed from the other side in the thickness direction thereof (the inner side in the radial direction of the flat-shape electrode assembly).
FIG. 17 is a plan view of the flat-shape electrode assembly according to the third embodiment of the present disclosure, viewed from one side in a height direction.
FIG. 18a is a schematic front view of a positive electrode of an elongated shape before being wound in a non-aqueous electrolyte secondary battery according to a fourth embodiment of the present disclosure, viewed from one side in a thickness direction thereof (an outer side in a radial direction of a flat-shape electrode assembly).
FIG. 18b is a schematic front view of the positive electrode of the elongated shape before being wound in the non-aqueous electrolyte secondary battery according to the fourth embodiment of the present disclosure, viewed from the other side in the thickness direction thereof (an inner side in the radial direction of the flat-shape electrode assembly).
FIG. 18c is a schematic front view of a negative electrode of an elongated shape before being wound in the non-aqueous electrolyte secondary battery according to the fourth embodiment of the present disclosure, viewed from one side in a thickness direction thereof (the outer side in the radial direction of the flat-shape electrode assembly).
FIG. 18d is a schematic front view of the negative electrode of the elongated shape before being wound in the non-aqueous electrolyte secondary battery according to the fourth embodiment of the present disclosure, viewed from the other side in the thickness direction thereof (the inner side in the radial direction of the flat-shape electrode assembly).

### DESCRIPTION OF EMBODIMENTS

Embodiments of the present disclosure will now be described in detail with reference to the attached drawings. In the following, when a plurality of embodiments and alternative configurations are included, construction of a new embodiment by suitably combining characteristic portions thereof is contemplated from the beginning. In addition, in the following description of embodiments, same structures in the drawings are assigned the same reference numerals, and will not be repeatedly described. Further, a plurality of drawings include schematic diagram(s), and size ratios such as a vertical length, a lateral length, and a height in respective members do not necessarily coincide among different drawings.

In the present disclosure, when the term "approximate" is used, the term is used to mean "roughly", and conditions for "approximately XXX" is satisfied when a human can roughly see or recognize as "XXX". For example, a condition of "a virtual plane which passes approximately a center of a flat-shape electrode assembly in a thickness direction and which is approximately orthogonal to the thickness direction" can be satisfied when a human can roughly recognize that the virtual plane is a virtual plane which passes through the center of the flat-shape electrode assembly in the thickness direction and which is roughly orthogonal to the thickness direction. In addition, while the non-aqueous electrolyte secondary battery of the present disclosure will be described with reference to a lithium ion battery which uses a non-aqueous electrolyte solution, the non-aqueous electrolyte secondary battery of the present disclosure may be any non-aqueous electrolyte secondary battery having the structure of the present disclosure, and is not limited to the lithium ion battery.

In the following description and in the drawings, an X direction refers to a thickness direction of a non-aqueous electrolyte secondary battery 1 of a laminated form, a Y direction refers to a width direction of the battery 1, and a Z direction refers to a height direction of the battery 1. The X direction, the Y direction, and the Z direction are orthogonal to each other. An α direction refers to a longitudinal direction of positive electrodes 40 and 140 of an elongated shape, and an arrow in the α direction indicates a direction from a winding start side toward a winding completion side. A β direction refers to a width direction (short side direction) of the positive electrodes 40 and 140 of the elongated shape. A γ direction refers to a longitudinal direction of negative electrodes 50 and 150 of an elongated shape, and an arrow in the γ direction indicates a direction from a winding start side toward a winding completion side. A δ direction refers to a width direction (short side direction) of the negative electrodes 50 and 150 of the elongated shape. The α direction is orthogonal to the β direction, and the γ direction is orthogonal to the δ direction.

The non-aqueous electrolyte secondary battery of the present disclosure may be used as an electric power source of any electric device, and may be used, for example, as a driving power supply for portable electronic devices such as smartphones, tablet computers, notebook personal computers, and portable music players. Further, of the constituting elements to be described below, constituting elements that are not described in an independent claim describing the broadest concept are optional constituting elements, and are not necessary constituting elements.

### (First Embodiment)

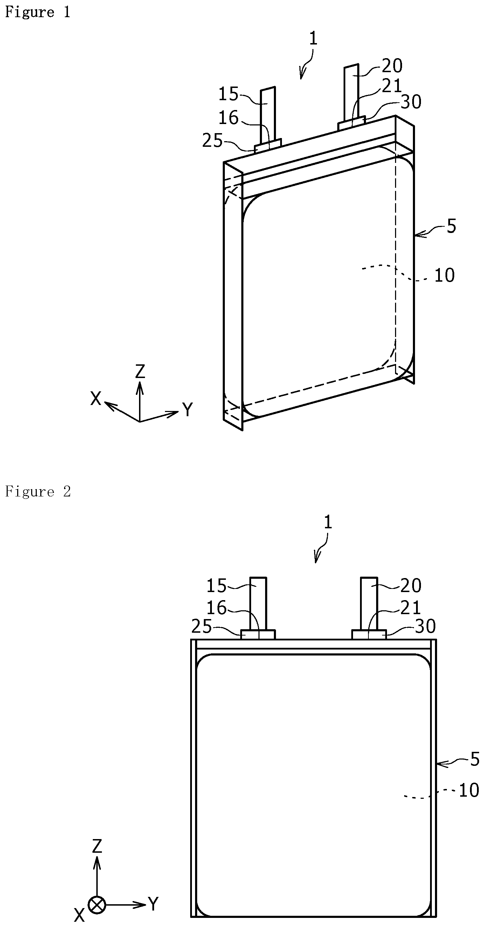

FIG. 1 is a perspective diagram of the non-aqueous electrolyte secondary battery 1 according to a first embodiment of the present disclosure. FIG. 2 is a front view of the non-aqueous electrolyte secondary battery 1. As shown in FIG. 1, the non-aqueous electrolyte secondary battery 1 (hereinafter also simply referred to as a "battery") is a lithium ion secondary battery of a so-called laminated form, and includes a laminated film outer housing 5 formed by joining laminate film members, a flat-shape electrode assembly 10, a positive electrode tab 15, a negative electrode tab 20, a positive electrode tab welding resin 25 (a welding film for the positive electrode tab), and a negative electrode tab welding resin 30 (a welding film for the negative electrode tab). The flat-shape electrode assembly 10 is housed in the film outer housing 5.

A laminate sheet forming the laminated film outer housing 5 is desirably produced by layering a metal layer and a resin layer, and desirably has at least the resin layer for thermal welding placed at an inner surface side of the laminated film outer housing 5. Alternatively, the resin layers may be placed over both surfaces of the metal layer, or an adhesive layer may be provided between the metal layer and the resin layer.

As the metal layer of the laminate sheet, there may be exemplified aluminum and an aluminum alloy. As the resin layer of the laminate sheet, there may be exemplified a polyolefin resin such as polypropylene and polyethylene, a polyamide resin such as nylon, and a polyester resin such as polyethylene terephthalate. As the adhesive layer, there may be exemplified a urethane resin and a polyolefin resin. In order to improve adhesiveness between the polyolefin resin and the metal layer, desirably, a carboxylate-modified polyolefin resin to which a carboxyl group is attached is used as the polyolefin resin of the adhesive layer.

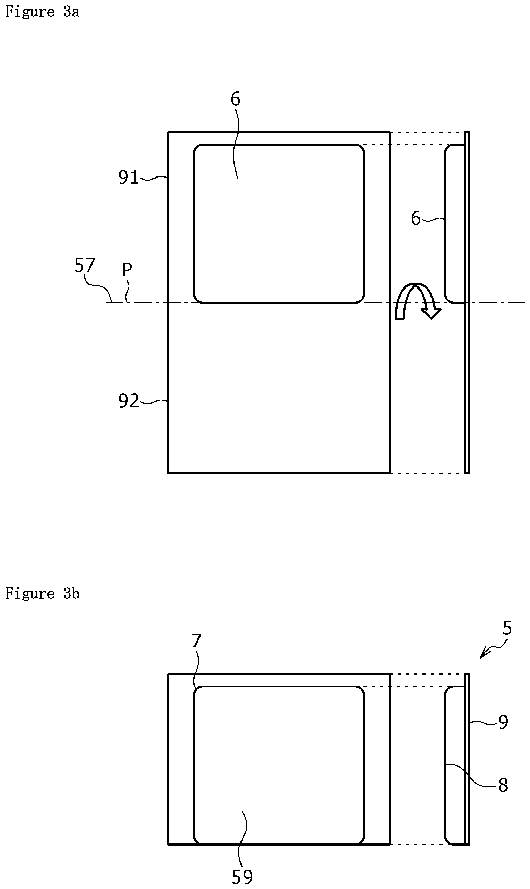

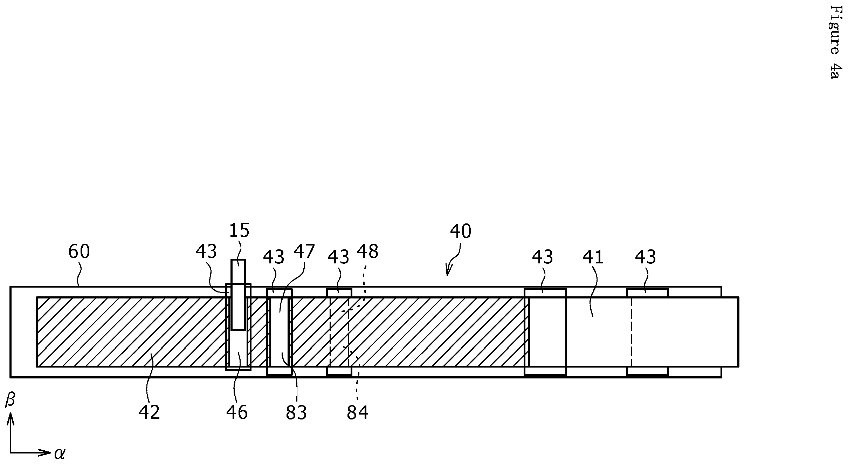

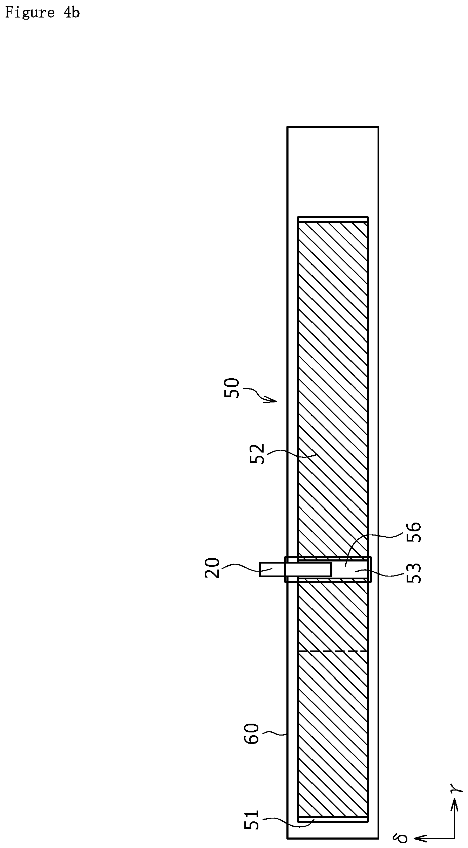

On the laminate sheet, a cup-shaped electrode assembly housing portion 59 (refer to FIG. 3b) is formed. The flat-shape electrode assembly 10 is produced using the positive electrode 40 of the elongated shape (refer to FIG. 4a), the negative electrode 50 of the elongated shape (refer to FIG. 4b), and two separators 60 of an elongated shape (refer to FIG. 4a). More specifically, the flat-shape electrode assembly 10 is produced, for example, by producing a wound electrode assembly by winding the positive electrode 40 of the elongated shape and the negative electrode 50 of the elongated shape with the separator 60 of the elongated shape therebetween, and then press-molding the wound electrode assembly in a flat shape. The positive electrode tab 15 is joined to and electrically connected to the positive electrode 40 through spot welding or the like, and the negative electrode tab 20 is joined to and electrically connected to the negative electrode 50 through spot welding or the like.

The positive electrode tab 15 extends via a thermal welding portion 16 of the laminated film outer housing 5 to the outside of the battery, and the negative electrode tab 20 extends via a thermal welding portion 21 of the laminated film outer housing 5 to the outside of the battery. The positive electrode tab 15 and the negative electrode tab 20 are positioned, in the front view of FIG. 2, with a spacing in the Y direction, and extend approximately in the Z direction. As shown in FIGs. 1 and 2, the positive electrode tab welding resin 25 includes a portion placed between the positive electrode tab 15 and the thermal welding portion 16, and the negative electrode tab welding resin 30 includes a portion placed between the negative electrode tab 20 and the thermal welding portion 21.

The battery 1 is produced, for example, in the following manner. First, a laminate sheet having an approximately quadrangular shape in the plan view is punched with a punching die for deep-drawing, so as to shape a recess 6 of an approximately rectangular parallelepiped shape serving as an electrode assembly housing portion shown in FIG. 3a, in an upper half region in a longitudinal direction of the laminate sheet. Then, as shown in FIG. 3b, the laminate sheet is folded into half in the longitudinal direction at an approximate center in the longitudinal direction, and the overlapped laminate sheet is welded with one of side seal portions provided at respective side ends in the Y direction and a top seal portion provided at an end at one side in the Z direction, to shape the laminate sheet into a pouch form. The flat-shape electrode assembly 10 is housed in the recess 6 before thermal welding. After a non-aqueous electrolyte is injected from the other one-side end in the Y direction which is not thermally welded, the side seal portion is thermally welded, so as to tightly seal the inside of the laminated film outer housing 5.

In the present embodiment, the recess 6 is shaped in a manner that the planar shape is approximately quadrangular. The recess 6 has a primary surface opposing an opening surface, and four side surfaces surrounding the primary surface. A corner portion 7 having a cross-sectional shape of a curved line may be provided between adjacent side surfaces, as in the present embodiment. In the present disclosure, an outer surface of a portion sealing the recess 6 in corresponding to the X direction on a bottom 8 of the recess 6 in the laminated film outer housing 5 is defined as a back surface 9. The thermal welding of the top seal portion is performed in a state in which the positive electrode tab 15 (refer to FIG. 1) and the negative electrode tab 20 are interposed between laminate sheets, and the surroundings of the tabs 15 and 20 are covered by the welding resins 25, 30 (refer to FIG. 1). The positive electrode tab welding resin 25 and the negative electrode tab welding resin 30 are provided in order to improve airtightness of the top seal portion. The positive electrode tab welding resin 25 and the negative electrode tab welding resin 30 may be formed from any resin material having an insulating characteristic, and are formed from, for example, modified polyolefin, polyester, or polyvinylidene fluoride.

Next, a structure of the flat-shape electrode assembly 10 will be described in detail. FIG. 4a is a schematic front view of the positive electrode 40 of the elongated shape before being wound, viewed from one side in a thickness direction thereof. FIG. 4b is a schematic front view of the negative electrode 50 of the elongated shape before being wound, viewed from one side in a thickness direction thereof. In FIGs. 4a and 4b, ends of the positive electrode 40 and the negative electrode 50 at a left side on the page are ends on a winding start side. In addition, in FIGs. 4a and 4b, lengths of the positive electrode 40 and the negative electrode 50 in the longitudinal direction are drawn significantly shorter than the actual lengths.

As shown in FIG. 4a, the positive electrode 40 includes a positive electrode core 41 of an elongated shape, and a positive electrode mixture layer 42 partially and selectively provided over both surfaces of the positive electrode core 41 in the α direction. The positive electrode 40 includes positive electrode non-coated portions 46, 47, and 48 at a midway in the longitudinal direction thereof, where the positive electrode mixture layer is not coated, and the positive electrode core 41 is exposed over an entire region in the β direction. On both sides, in the α direction, of each of the positive electrode non-coated portions 46, 47, and 48, the positive electrode mixture layer 42 is present.

A length of the first positive electrode non-coated portion 46 in the α direction is slightly longer than a length of the positive electrode tab 15 in the α direction, and the positive electrode tab 15 is joined through spot welding to a center portion of the first positive electrode non-coated portion 46 in the α direction. The first positive electrode non-coated portion 46 is a non-coated portion where the positive electrode mixture layer is not coated over either surface of the positive electrode core 41. The two first positive electrode non-coated portions 46 are provided approximately at a same location in the α direction. The second positive electrode non-coated portion 47 is present on a side surface on a front surface side of FIG. 4a, with a spacing in the α direction with respect to the first positive electrode non-coated portion 46. The third positive electrode non-coated portion 48 is present on a side surface on a back surface side of FIG. 4a, with a spacing in the α direction with respect to the second positive electrode non-coated portion 47.

Lengths of the second and third positive electrode non-coated portions 47 and 48 in the α direction are longer than or equal to a length, in the γ direction, of a negative electrode non-coated portion 56 to be described below, and are desirably longer than this length of the negative electrode non-coated portion 56 in the γ direction. A length of a negative electrode core 51 in the δ direction is longer than a length of the positive electrode core 41 in the β direction. In the flat-shape electrode assembly 10, portions of the negative electrode non-coated portion 56 other than respective ends in the height direction (that is, the Z direction) oppose the second positive electrode non-coated portion 47 in the thickness direction (the thickness direction of the flat-shape electrode assembly 10), and also oppose the third positive electrode non-coated portion 48 in the thickness direction. Alternatively, the lengths of the second and third positive electrode non-coated portions 47 and 48 in the α direction may be shorter than the lengths of the negative electrode non-coated portion 56 in the γ direction.

Because the flat-shape electrode assembly 10 is produced by press-molding the wound electrode assembly in the flat shape, the flat-shape electrode assembly 10 tends to become highly dense in the thickness direction. Therefore, if the positive electrode mixture layer, which is the side of discharging lithium ions, is present at a position opposing, in the thickness direction, the negative electrode non-coated portion 56, where the negative electrode core 51 is exposed, lithium may react with the negative electrode at the periphery, and may excessively precipitate on the negative electrode, which may possibly cause short-circuiting in the worst case scenario. Therefore, in the present embodiment, on the positive electrode 40, the second and third positive electrode non-coated portions 47 and 48 are provided at positions opposing the negative electrode non-coated portion 56 in the thickness direction in the flat-shape electrode assembly 10, so as to eliminate a reacting portion between the positive and negative electrodes, to thereby reliably prevent short-circuiting and realize a high degree of safety.

Over the entire regions of the first through third positive electrode non-coated portions 46, 47, and 48 and locations, on the ends of the positive electrode mixture layer 42 in the α direction, opposing the negative electrode 50 with the separator therebetween in the flat-shape electrode assembly 10, an insulating tape 43 is adhered. The insulating tape 43 is formed from an insulating material such as polyimide. At a boundary between a location where the positive electrode mixture layer 42 is present and a location where the positive electrode mixture layer 42 is not present, a step is caused corresponding to the thickness of the positive electrode mixture layer 42. In such a location, when an external force is coated to the battery 1, for example, when the battery 1 is erroneously fallen, the positive electrode mixture may slipped out, and the slipped-out positive electrode mixture may cause short-circuiting. The insulating tape 43 is adhered in order to suppress such short-circuiting. Lengths, in the α direction, of the tapes 43 adhered to the positive electrode non-coated portions 47 and 48 are longer than the length of the negative electrode non-coated portion 56 in the γ direction.

The first through third positive electrode non-coated portions 46, 47, and 48 are formed by intermittently applying the positive electrode mixture over both surfaces of the positive electrode core 41, and the positive electrode 40 is produced in the following manner. Specifically, a conductive agent, a binder, or the like is mixed with a positive electrode active material, and the mixture is kneaded in a dispersion medium, to produce a positive electrode mixture slurry of a paste form. Then, the positive electrode mixture slurry is coated over the positive electrode core 41 of a hoop shape, formed by a metal foil such as aluminum. Next, the coated positive electrode mixture slurry is dried and compressed, to form the positive electrode mixture layer 42 over the positive electrode core 41. Finally, the positive electrode core 41 over which the positive electrode mixture layer 42 is placed is cut in a predetermined size, to produce the positive electrode 40.

The intermittent coating of the positive electrode mixture slurry may be performed, for example, in the following manner. Specifically, the elongated positive electrode core 41 in the hoop shape is wound out by a drive roll (not shown), so that the positive electrode core 41 is transported toward one side in the α direction at a certain speed, under an ejection portion (formed from, for example, an ejection nozzle) of a positive electrode mixture slurry ejection apparatus. In this state, the positive electrode mixture slurry is intermittently ejected from the ejection portion toward the positive electrode core 41. The positive electrode mixture slurry is ejected, and then, the ejection of the positive electrode mixture slurry is temporarily stopped. Afterwards, the positive electrode mixture slurry is again ejected.

In this manner, the first and second positive electrode non-coated portions 46 and 47 which are locations where the positive electrode mixture slurry is not coated can be formed over a surface on one side of the positive electrode core 41 at the timing when the ejection of the positive electrode mixture slurry is temporarily stopped, and further, the first and third positive electrode non-coated portions 46 and 48 which are locations where the positive electrode mixture slurry is not coated can be formed when the positive electrode mixture slurry is coated over a surface on the other side of the positive electrode core 41. The first positive electrode non-coated portions 46 are provided over both surfaces, and have an approximately equal length in the α direction.

As shown in FIG. 4b, the negative electrode 50 includes a negative electrode core 51 of an elongated shape, and a negative electrode mixture layer 52 partially and selectively provided over both surfaces of the negative electrode core 51 in the γ direction. The negative electrode 50 includes the negative electrode non-coated portion 56 at a midway in the γ direction thereof, where the negative electrode mixture layer is not coated and the negative electrode core 51 is exposed over an entire region in the δ direction. On both sides of the negative electrode non-coated portion 56 in the γ direction, the negative electrode mixture layer 52 is present. The length of the negative electrode non-coated portion 56 in the γ direction is slightly longer than a length of the negative electrode tab 20 in the γ direction, and the negative electrode tab 20 is joined through spot welding to a center portion of the negative electrode non-coated portion 56 in the γ direction. After the negative electrode tab 20 is joined, an insulating tape 53 is adhered over the entire region of the negative electrode non-coated portion 56. The negative electrode non-coated portion 56 is provided over both surfaces. The two negative electrode non-coated portions 56 are provided approximately at the same location in the γ direction, and have an approximately equal length in the γ direction.

The negative electrode 50 is produced, for example, in the following manner. A conductive agent, a thickener, or the like is mixed with a negative electrode active material, and the mixture is kneaded in a dispersion medium, to produce a negative electrode mixture slurry of a paste form. Then, the negative electrode mixture slurry is intermittently coated over the negative electrode core 51 of a hoop shape formed with a metal foil such as copper. Next, the intermittently coated negative electrode mixture slurry is dried and compressed, to form the negative electrode mixture layer over the negative electrode core. Finally, the negative electrode core over which the negative electrode mixture layer is placed is cut in a predetermined size, to produce the negative electrode 50. The intermittent coating of the negative electrode mixture slurry may be realized similarly to the intermittent coating of the positive electrode mixture slurry. In FIGs. 4a and 4b, a quadrangular frame at an outer side shows an outer edge of the separator 60 of the elongated shape. A size, in the width direction, of the separator 60 of the elongated shape is longer than the size, in the β direction, of the positive electrode core 41 of the elongated shape, and is longer than a size, in the δ direction, of the negative electrode core 51 of the elongated shape, so as to reliably prevent short-circuiting.

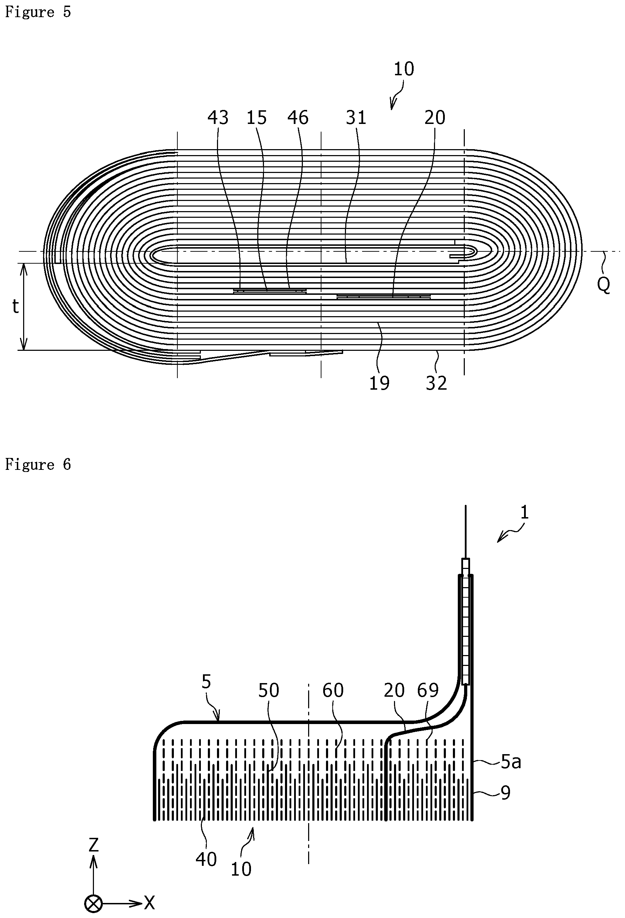

FIG. 5 is a plan view of the flat-shape electrode assembly 10, viewed from one side in the Z direction. As shown in FIG. 5, a total thickness of the positive electrode tab 15, the welding portion thereof, and the adhesive tape 43 adhered to the positive electrode non-coated portion 46 (non-coating on both surfaces) is approximately equal to the thickness of the positive electrode mixture layer 42. Further, a total thickness of the negative electrode tab 20, the welding portion thereof, and the insulating tape 53 adhered to the negative electrode non-coated portion 56 is approximately equal to the thickness of the negative electrode mixture layer 52. Moreover, a total thickness of each of the positive electrode non-coated portions 47 and 48 (non-coating on one surface) opposing the negative electrode tab 20 and the insulating tape 43 is approximately equal to the thickness of the positive electrode mixture layer 42. A cumulative thickness of the layers formed from the components of the electrode assembly is approximately equal on various locations. In addition, as described above, the positive electrode non-coated portion 46 to which the positive electrode tab 15 is fixed is provided in such a configuration that the positive electrode mixture layer 42 is present on both sides thereof in the α direction, and the negative electrode non-coated portion 56 to which the negative electrode tab 20 is fixed is provided in such a configuration that the negative electrode mixture layer 52 is present on both sides thereof in the γ direction. That is, the positive electrode tab 15 is fixed to a location at the midway in the longitudinal direction of the positive electrode 40 instead of the end of the positive electrode 40 in the longitudinal direction, and the negative electrode tab 20 is fixed to a location at the midway in the longitudinal direction of the negative electrode 50 instead of the end of the negative electrode 50 in the longitudinal direction. An opposing location opposing the negative electrode tab 20 in the positive electrode 40 includes core exposed portions 83 and 84 where the positive electrode core 41 is exposed (positive electrode non-coated portions 47 and 48).

As shown in FIG. 5, the positive electrode tab 15 and the negative electrode tab 20 are positioned at the same side (lower side of the page in FIG. 5) with respect to a virtual plane Q which passes approximately the center of the flat-shape electrode assembly 10 in the thickness direction and which is approximately orthogonal to the thickness direction. It is sufficient that the positive electrode tab 15 and the negative electrode tab 20 are positioned on the same side with respect to the virtual plane Q. However, when the fixation position of the positive electrode tab 15 in the longitudinal direction is set closer to the center of the positive electrode 40 in the longitudinal direction, an electricity collecting path can be shortened. Similarly, when the fixation position of the negative electrode tab 20 in the longitudinal direction is set closer to the center of the negative electrode 50 in the longitudinal direction, the electricity collecting path can be shortened. Therefore, by performing at least one of setting the fixation position of the positive electrode tab 15 in the longitudinal direction to be closer to the center of the positive electrode 40 in the longitudinal direction and setting the fixation position of the negative electrode tab 20 in the longitudinal direction to be closer to the center of the negative electrode 50 in the longitudinal direction, it is possible to reduce an internal resistance of the battery 1, and, as a consequence, an effective operational advantage can be obtained such as reduction of electric power loss. In particular, by performing both the setting the fixation position of the positive electrode tab 15 in the longitudinal direction to be closer to the center of the positive electrode 40 in the longitudinal direction and setting the fixation position of the negative electrode tab 20 in the longitudinal direction to be closer to the center of the negative electrode 50 in the longitudinal direction, it is possible to significantly reduce the internal resistance of the battery 1, and, as a consequence, an effective operational advantage can be obtained such as a significant reduction of the electric power loss.

Thus, in a one-side region portion of the flat-shape electrode assembly 10 with respect to the virtual plane Q, when a size, in the thickness direction, of a layered location 19 in which the positive electrode 40, the negative electrode 50, and the separator 60 are layered in the thickness direction is t, desirably, in relation to the thickness direction of the flat-shape electrode assembly 10, each of the positive electrode tab 15 and the negative electrode tab 20 is present from a location positioned at an outer side in the thickness direction by greater than or equal to t/10 from an innermost circumferential position 31 of the layered location 19 to a location positioned at an inner side in the thickness direction by greater than or equal to t/10 from an outermost circumferential position 32 of the layered location 19.

Further, more desirably, in relation to the thickness direction of the flat-shape electrode assembly 10, each of the positive electrode tab 15 and the negative electrode tab 20 is present from a location positioned at an outer side in the thickness direction by greater than or equal to t/7 from the innermost circumferential position 31 to a location positioned at an inner side in the thickness direction by greater than or equal to t/7 from the outermost circumferential position 32. Further desirably, each of the positive electrode tab 15 and the negative electrode tab 20 is present from a location positioned at an outer side in the thickness direction by greater than or equal to t/5 from the innermost circumferential position 31 to a location positioned at an inner side in the thickness direction by greater than or equal to t/5 from the outermost circumferential position 32. Further, most desirably, each of the positive electrode tab 15 and the negative electrode tab 20 is present from a location positioned at an outer side in the thickness direction by greater than or equal to t/3 from the innermost circumferential position 31 to a location positioned at an inner side in the thickness direction by greater than or equal to t/3 from the outermost circumferential position 32.

FIG. 6 is a schematic partial cross-sectional diagram of the battery 1, cut in a cross section passing through the negative electrode tab 20 and including the X direction and the Z direction. A bent structure on a tip side of the negative electrode tab 20 will now be described with reference to FIG. 6 or the like. The positive electrode tab 15 has a bent structure similar to that of the negative electrode tab 20 on a tip side. With the description of the bent structure on the tip side of the negative electrode tab 20, description of the bent structure on the tip side of the positive electrode tab 15 will be omitted.

As shown in FIG. 6, the negative electrode tab 20 extends in the Z direction from a center portion, in the X direction, of a region positioned on the flat-shape electrode assembly 10, at the side nearer to the back surface 9 of the laminated film outer housing 5 than the center of the flat-shape electrode assembly 10 in the X direction, to a position around one end of the separator 60 in the Z direction. The negative electrode tab 20 is bent from the position around the one end of the separator 60 in the Z direction by an angle close to the right angle toward the side of the back surface 9 in a direction including the X direction, extends in this direction to a region near the back surface portion 5a of the laminated film outer housing 5, is bent in a direction approximately parallel to the Z direction, and extends to the outside of the battery 1 along the back surface portion 5a.

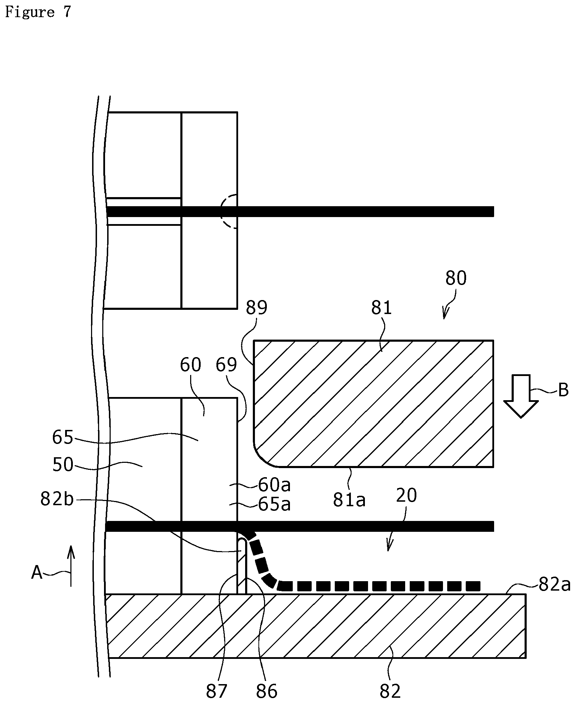

FIG. 7 is a schematic cross-sectional diagram of a tab shaping apparatus 80 which shapes the negative electrode tab 20 into such a shape. The tab shaping apparatus 80 includes a bending jig 81, a receiving jig 82, and an actuator (not shown). The bending jig 81 and the receiving jig 82 respectively have planar shaping surfaces 81a and 82s which are approximately parallel with each other. The receiving jig 82 further has a protrusion 82b of a flat plate shape, which protrudes from the shaping surface 82a in a direction of a line of normal shown by an arrow A. The actuator includes a motor, and causes the bending jig 81 to move relative to the receiving jig 82 in a straight line in the direction of the line of normal. A one-side surface 86 of the protrusion 82b of the flat plate shape is approximately parallel with the other-side surface 89 of the bending jig 81. At a position where a part of the negative electrode tab 20 is sandwiched by the shaping surface 81a of the bending jig 81 and the shaping surface 82a of the receiving jig 82, the one-side surface 86 of the protrusion 82b opposes the other-side surface 89 of the bending jig 81, with a slight gap of about a thickness of the negative electrode tab 20 therebetween.

As shown in FIG. 7, the separator 60 has a projected allowance 60a protruding more to the outer side in the Z direction than a tip, in the Z direction, of the negative electrode 50, which is positioned on an outer side in the Z direction among the positive electrode 40 and the negative electrode 50. The actuator is driven in a state in which the tips, in the height direction, of a group of projected allowances 65a contained in a group of separators 65 is in contact with the other-side surface 87 of the protrusion 82b without being bent, so that the bending jig 81 is moved close to the receiving jig 82, a part of the negative electrode tab 20 is sandwiched by the shaping surface 81a of the bending jig 81 and the shaping surface 82a of the receiving jig 82, and a portion of the negative electrode tab 20 positioned at an outer side in the height direction than the projected allowance 60a is shaped.

In the battery 1 of the present embodiment, the negative electrode tab 20 is fixed to a location at the midway of the negative electrode 50 in the γ direction instead of the end of the negative electrode 50 in the longitudinal direction, in a state in which the negative electrode mixture layer 52 is present on both sides in the γ direction. Therefore, because the negative electrode mixture layer 52 is present around the negative electrode tab 20, the rigidity around the negative electrode tab 20 can be increased. Thus, a starting point of the bending can be stabilized, and further, by providing the protrusion 82b on the receiving jig 82, it becomes possible to bend the negative electrode tab 20 approximately in the right angle at an outer side of the projected allowance 60a of the separator 60 in the Z direction. In addition, because the negative electrode tab 20 is fixed to the location at the midway of the negative electrode 50 in the γ direction, the negative electrode tab 20 protrudes in the Z direction from a portion nearer to the side of the back surface 9 of the laminated film outer housing 5 than the center of the flat-shape electrode assembly in the X direction. Thus, the negative electrode tab 20 is bent at a portion nearer to the side of the back surface 9, and a distance of the bending portion from the negative electrode tab 20 to the back surface portion 5a can be shortened.

Therefore, the height of the protrusions 82b can be reduced, bend-machining of the negative electrode tab 20 can be performed with high precision, and the negative electrode tab 20 after the bend-machining can be positioned with high precision. Therefore, the bending shape of the negative electrode tab 20 can be stabilized at the approximate right angle, variation in the position of presence of the sealing portion (welding resin 30) fixed to the negative electrode tab 20 can be suppressed, and the sealing portion can be welded at a predetermined position. Further, because the negative electrode tab 20 after the bend-machining can be positioned with high precision, interference of the negative electrode tab 20 to the projected allowance 60a of the separator 60 can be approximately prevented, and deformation of the separator 60 caused by the contact with the negative electrode tab 20 can be approximately prevented. As a result, short-circuiting can be reliably prevented and the degree of safety can be significantly improved.

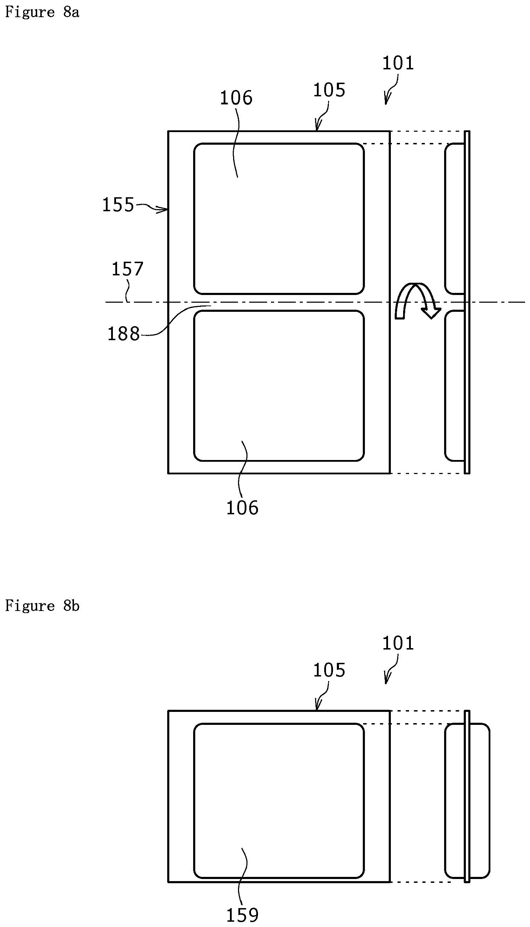

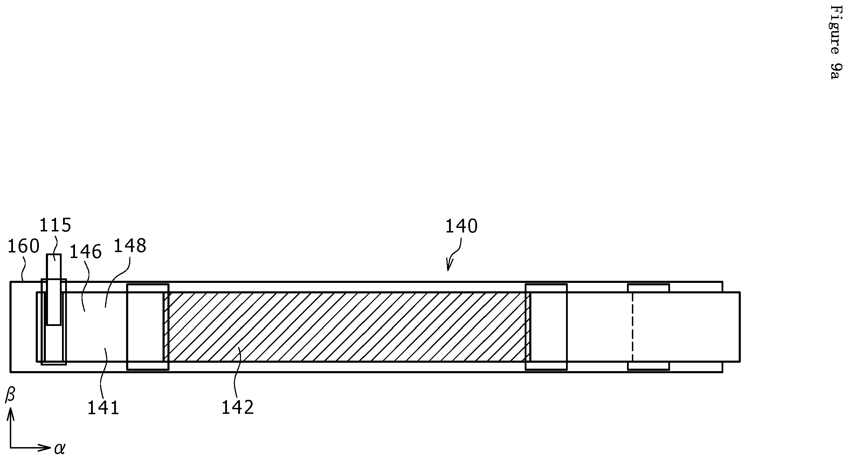

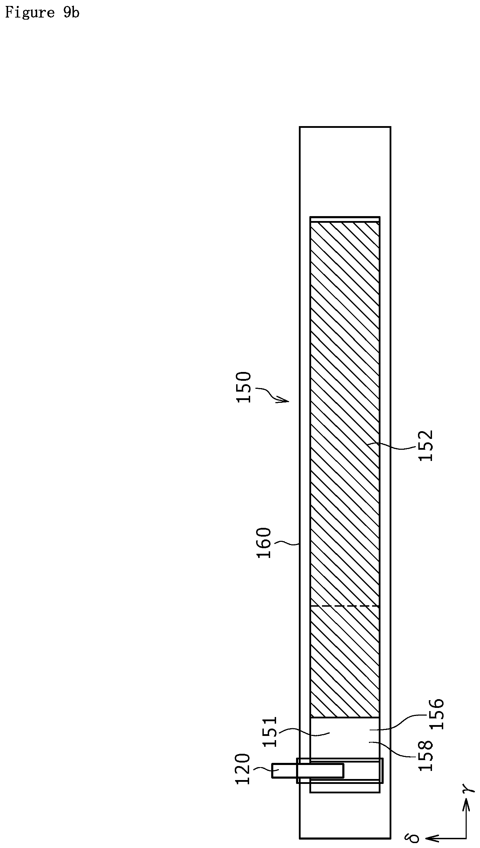

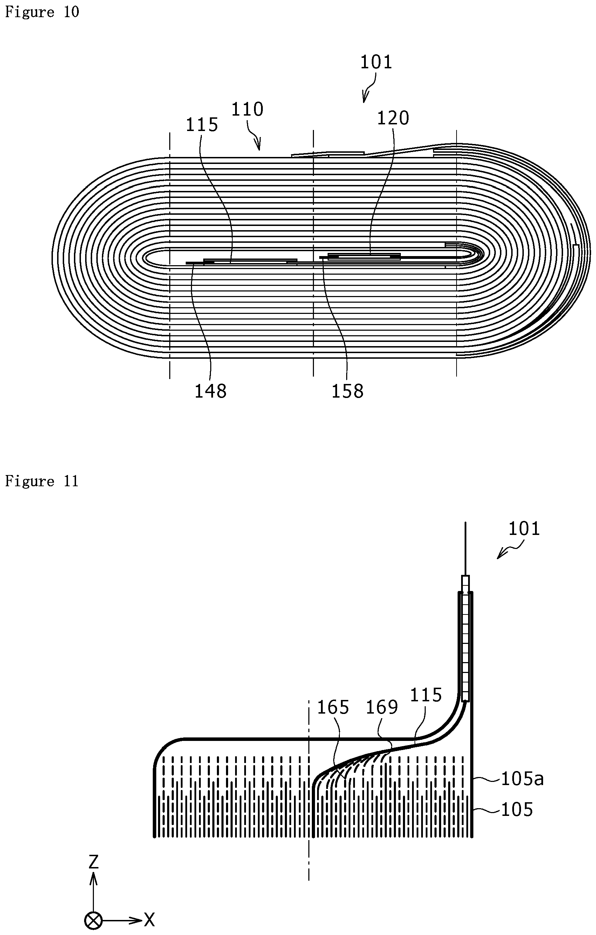

Next, a significant operational advantage of the battery 1 according to the present disclosure will be described in detail, in a comparison to a battery 101 of a referential example having the structure of the related art. FIGs. 8a and 8b are explanatory diagrams corresponding to FIGs. 3a and 3b, for a laminated film outer housing 105 of the battery 101 of the referential example. FIG. 9a is a schematic front view corresponding to FIG. 4a, for the positive electrode 140 of the battery 101 of the referential example, and FIG. 9b is a schematic front view corresponding to FIG. 4b, for the negative electrode 150 of the battery 101 of the referential example. FIG. 10 is a plan view corresponding to FIG. 5, for a flat-shape electrode assembly 110 of the battery 101 of the referential example. In FIGs. 9a and 9b, reference numeral 160 shows a separator.

As shown in FIG. 8a, the battery 101 of the referential example differs from the battery 1 of the present disclosure in that the film outer housing 105 is used having a cup-shaped electrode assembly housing portion 159 formed through a process in which, with a fold-back line 157 of a laminate sheet, having an approximately quadrangular shape in the plan view, as a boundary, two recesses 106 of approximately rectangular parallelepiped shape having a depth of approximately 1/2 of that of the recess 6 (refer to FIG. 3a) are punched on both sides of the fold-back line 157 by a punching die, and then the laminate sheet is folded back at the fold-back line 157. In addition, as shown in FIGs. 9a and 9b, the battery 101 of the referential example differs from the battery 1 of the present disclosure in that a positive electrode non-coated portion 146 of the positive electrode mixture is provided at an end of a positive electrode core141 on a winding start side, a positive electrode tab 115 is fixed to the positive electrode non-coated portion 146, a negative electrode non-coated portion 156 of the negative electrode mixture is provided at an end of a negative electrode core 151 on a winding start side, and a negative electrode tab 120 is fixed to the negative electrode non-coated portion 156.

As shown in FIG. 8a, in the battery 101 of the referential example, because the recesses 106 are formed on both sides of the fold-back line 157, the recesses 106 must be formed at locations distanced in the Z direction with respect to the fold-back line 157. Due to this structure, a flat portion 188 is inevitably formed around the fold-back line 157, and, because of the flat portion 188, it is difficult to increase the volume of the electrode assembly housing portion 159. As a result, it becomes difficult to house a flat-shape electrode assembly of a large capacity in the laminated film outer housing 105. On the other hand, as shown in FIG. 3a, in the battery 1 of the present disclosure, the recess 6 is formed only on one side of a fold-back line 57, and therefore, it is possible to coincide an outer edge of the recess 6 with the fold-back line 57. Therefore, in comparisons to the battery 101 of the referential example, the flat portion 188 can be removed, and the volume of the electrode assembly housing portion 59 for housing the flat-shape electrode assembly 10 can be increased. As a result, the capacity of the battery 1 can be significantly increased.

Further, in the case of the positive electrode 40 and the negative electrode 50 of the present disclosure shown in FIGs. 4a and 4b, intermittent layers are partially provided on locations of the formation regions of the mixture layers 42 and 52 other than the ends in the width direction, and the tabs 15 and 20 are attached to these layers. Thus, in comparison to the positive electrode 140 and the negative electrode 150 of the referential example shown in FIGs. 9a and 9b, the end of the positive electrode core 141 on the winding start side can be removed in the positive electrode 140, and the length, in the γ direction, of the negative electrode core 151 at the winding start side can be shortened. As a whole, the lengths of the positive electrode mixture layer 42 and the negative electrode mixture layer 52 can be increased, and the capacity can be increased.

More specifically, as shown in FIG. 10, in the battery 101 of the referential example, there exist positive and negative electrode core exposed portions 148 and 158 in which the mixture layer is not present, at the innermost circumferential portion of the flat-shape electrode assembly 110. On the other hand, in the flat-shape electrode assembly 10 of the present disclosure shown in FIG. 5, the positive and negative electrode core exposed portions 148 and 158 at the innermost circumferential portion can be removed, and the mixture layers 42 and 52 may be increased by the volume corresponding to this removal. Thus, the mixture layers 42 and 52 can be increased by approximately one layer, and a higher capacity can be realized.

Therefore, in the battery 1 of the present disclosure, the capacity can be significantly increased in comparison to the battery 101 of the referential example by a synergetic effect of employing the laminated film outer housing 5 having no flat portion 188, and employing the positive electrode 40 in which an intermittent layer is partially provided in the positive electrode mixture layer 42 and the negative electrode 50 in which an intermittent layer is partially provided in the negative electrode mixture layer 52.

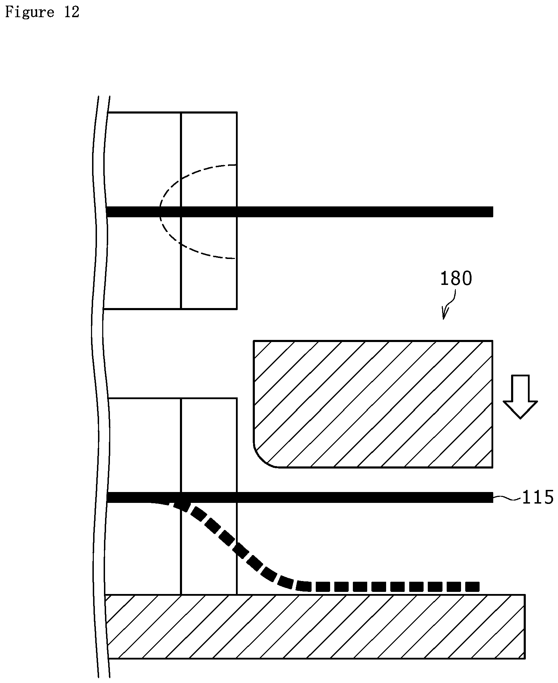

Furthermore, in the case of the battery 101 of the referential example, as shown in FIG. 10, the tabs 115 and 120 protrude from a region near the center of the flat-shape electrode assembly 110 in the thickness direction. Thus, as shown in FIG. 11 which is a schematic partial cross-sectional diagram corresponding to FIG. 6, for the battery 101 of the referential example, a distance in the Z direction from the position of protrusion of the negative electrode tab 120 in the Z direction to a back surface portion 105a of the laminated film outer housing 105 is long. In addition, because the negative electrode core exposed portion 158 (refer to FIG. 10) in which there is no negative electrode mixture layer 152 is present around the negative electrode tab 120, the rigidity around the negative electrode tab 120 is low. Thus, as shown in FIG. 12 which is a schematic cross-sectional diagram of a tab shaping apparatus 180 which shapes the negative electrode tab 120 of the battery 101 of the referential example, a shaping length of the negative electrode tab 120 on the tip side is long, the starting point of bending becomes unstable, and it becomes difficult to precisely bend-machine the negative electrode tab 120.

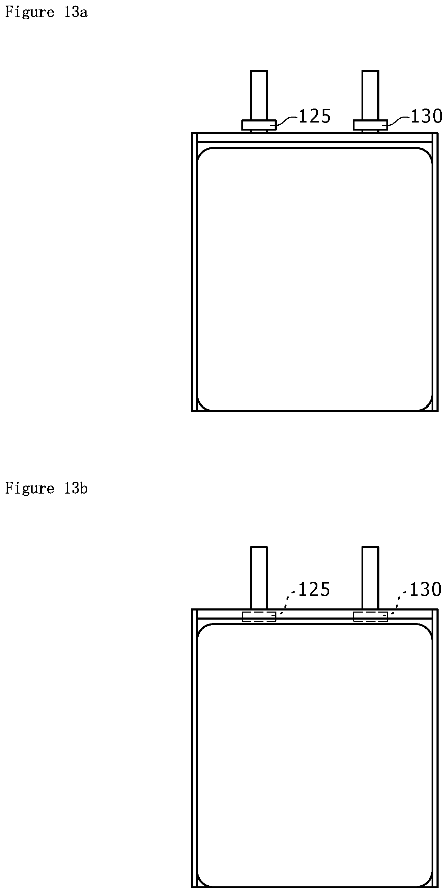

Thus, the distance from the negative electrode tab 120 to the sealing portion becomes long, the negative electrode tab 120 tends to become unstable in shape, and the position of presence of the welding resin tends to easily vary. Specifically, there are a high possibility that welding resins 125 and 130 are positioned at an outer side than the sealing location as shown in FIG. 13a, resulting in a sealing deficiency, and a high possibility that welding resins 135 and 130 are positioned at an outer side than the sealing location as shown in FIG. 13b, resulting in a sealing deficiency. In addition, because the negative electrode tab 120 is unstable in the shape, there is a risk of the negative electrode tab 120 interfering a group of separators 165 as shown in FIG. 11, resulting in deformation of tips 169 of the group of separators 165. As a consequence, there is a risk of reduction of the degree of safety.

On the other hand, in the battery 1 of the present disclosure, because the tabs 15 and 20 are attached at positions of high rigidity at the midway on the electrode plates, the distances from the tabs 15 and 20 to the sealing portions can be shortened, and a root of the projected allowance 60a of the separator 60 in the tabs 15 and 20 can be bent and shaped in the approximately right angle. Therefore, the variation of the positions of presence of the welding resins 25 and 30 can be suppressed, the battery 1 of high reliability can be produced, and deformation of the tip 69 of the separator 60 due to the contact with the tabs 15 and 20 can be approximately prevented. Thus, the battery 1 having a high degree of safety can be produced.

Furthermore, in general, when the film outer housing shown in FIG. 3a, that is, a film outer housing in which the recess is formed only on one side of the fold-back line and the flat portion is removed, is employed in order to increase the capacity, the recess becomes deep and the laminate film is extended. Therefore, depending on the extension of the tab to the upper part, there is a possibility that deformation of the upper part of the separator is induced, and that a variation is caused in the length from an attachment portion of the tab to the sealing position.

However, in the battery 1 of the present disclosure, because the tabs 15 and 20 are attached at positions of high rigidity at the midway of the electrode plates, such a possibility can be eliminated, variation of the positions of presence of the welding resins 25 and 30 can be suppressed, and the battery 1 with high reliability can be produced. In addition, the deformation of the tip 69 of the separator 60 can be approximately prevented, and the battery 1 with high degree of safety can be produced. Therefore, the operational advantages of the present disclosure, that a high degree of safety and high sealing reliability can both be realized, can be set more significant.

In the case in which the tabs 115 and 120 are fixed to the ends of the cores at the winding start side by not forming the mixture layer at these ends, as in the battery 101 of the referential example, when the electrode assembly is shaped as the flat-shape electrode assembly 110 with a certain thickness, the locations of the tabs 115 and 120 and the locations at which the insulating tape are adhered are compressed to a greater degree than the other locations, corresponding to the thickness of these locations. Therefore, after long-term cycles, a local distortion may be caused, possibly resulting in battery expansion and capacity degradation.

On the other hand, in the battery 1 of the present disclosure, total thicknesses of the tabs 15 and 20, the welding portions thereof, and the insulating tapes 43 and 53 adhered to the intermittent coating portions are approximately equal to the thicknesses of the mixture layers 42 and 52, respectively, and, thus, distortion does not tend to be caused after the long-term charge/discharge cycles. Therefore, in the battery 1 of the present disclosure, a high capacity maintaining rate can be easily realized, and high reliability can be achieved.

Placing the positive electrode tab at an end of the positive electrode on the winding completion side and placing the negative electrode tab at an end of the negative electrode on the winding completion side are effective for suppression of deformation of the separator and improvement of the variation of the sealing positions. However, similar to the case in which the positive electrode tab is placed on the end of the positive electrode on the winding start side and/or in which the negative electrode tab is placed on the end of the negative electrode at the winding start side, a large core exposed portion is necessary, capacity loss is thus caused, and transfer of the tab portion to the film outer housing becomes significant. Thus, such a configuration is not desirable.

### [Tests for confirming Operational Advantage of Battery of Present Disclosure, and Results of the Tests]

The present inventors have prepared 200 laminated form batteries of Example, and 200 laminated form batteries of the referential example (having the structure of related art). The batteries of Example had the same structure as the battery 1 described above, and, for the batteries of the referential example, a structure was employed which differs from the battery 101 described above only in that the laminated film outer housing 5 shown in FIG. 3b was employed as the laminated film outer housing in place of the laminated film outer housing 105 shown in FIG. 8b. In addition, the batteries of Example were produced to have 4.4 V, a thickness of 4.9 mm, a width of 56 mm, a height of 69 mm, and a rated capacity of 3100 mA. The batteries of referential example were produced to have 4.4 V, a thickness of 4.9 mm, a width of 56 mm, a height of 69 mm, and a rated capacity of 3040 mA. The rated capacities differed between Example and referential example because designs for a length and a thickness of coating of the electrode plate differ depending on the difference in the location of attachment of the tabs.

### <Electrode Plate and Winding>

For the positive electrode and the negative electrode, coating was performed through methods of the related art. In Example, the mixture slurries were coated to achieve predetermined thicknesses and sizes, while changing the positions of the intermittent portions from the referential example. Then, for both Example and referential example, the tab with the welding resin and necessary insulating tapes were attached, the structures were cut in a predetermined length, and winding was performed with the separator interposed.

### <Assembly, Solution Injection, and Checking for Sealing Deficiency>

For both Example and referential example, a flat-shape electrode assembly was inserted into a single cup-shape laminate (laminate only having one recess before fold back) shaped in a predetermined shape in advance, and the laminate was folded at the bottom of the cup to wrap around the flat-shape electrode assembly. In this process, the tab extending to the upper part of the electrode assembly was folded toward the back surface side of the laminate in the thickness direction using a jig, so as to sandwich the sealing portion in a manner that the welding resin (welding film) attached to the tab was overlapped with an overlapping portion at the upper part of the laminate. The structure was heated to a predetermined temperature and held, and sealing of the upper part was performed. A side portion on one side was also sealed by heating and holding the laminate overlapping portion. At this point, a number of batteries having a sealing deficiency was checked for both Example and reference example among the 200 batteries. Then, for the batteries having no sealing deficiency, a predetermined amount of the electrolyte solution was injected under a dry environment from the side portion which was not sealed, the structure was heated and held, and the side portion of the solution injection side was sealed. After the electrolyte solution was caused to infiltrate, predetermined charging and discharging were performed, to complete the battery.

### <Initial Capacity Test>

For both Example and referential example, 30 batteries were charged and discharged for one cycle with rated voltages and currents (3100 mA for Example and 3040 mA for referential example), and measurement was performed defining the discharge capacity at this point as an initial capacity.

### <Shipping Charge Thickness, Internal Resistance Test>

After the initial capacity was measured, for both Example and referential example, the batteries were charged for 18 minutes with the rated currents and were charged to 30%. After the batteries were left for one hour, a thickness of the maximum portion was measured and the internal resistance was measured.

### <Cycle Test at Room Temperature>

For both Example and referential example, using 5 batteries among 30 batteries, a charge/discharge cycle test was performed. Under a room temperature environment, the cycle was repeated for 500 times with conditions of currents of 3100 mA for Example and 3040 mA for referential example, and voltages of 4.4 V (charging) and 3.0 V (discharging). After the 500 cycles, the capacity and the thickness were measured.

### <External Short-Circuiting Test>

For both Example and referential example, external short-circuiting test was performed in which 5 batteries among 30 batteries were fully charged, were placed in a constant-temperature tank of 55°C, and were connected to an external resistance of 30 mQ for short-circuiting.

### <Thermal Test>

For both Example and referential example, thermal test was performed in which 5 batteries among 30 batteries were fully charged, and were placed and held in a constant-temperature tank of 150°C.

### [Test Results]

From the tests described above, the following results shown in TABLE 1 were obtained.

**[TABLE 1]**

| | | | Example | Referential Example |
|---|---|---|---|---|
| Sealing Position Deficiency N=200 | | | 0/200p | 3/200ρ |
| Initial Capacity N=30 | | | 3175mAh (3158~319 0) | 3100mAh (3070~313 0) |
| Shipping Charge Thickness N = 30 | | | 4. 6 2mm (4. 61~4. 64) | 4. 6 9mm (4. 6 8 ~ 4. 7 3) |
| Internal Resistance N= 30 | | | 15. 3mΩ (14. 9 ~ 15. 8 ) | 32. 7mΩ (31. 8 ~ 33. 4 ) |
| RT Cycle N= 5 | | 500th Capacity Maintaining Rate | 89% (88~90%) | 86% (85~88%) |
| | | 500th Thickness | 5. 13mm (5. 12~5. 1 8) | 5. 2 4mm (5. 2 1 ~ 5. 2 7) |
| External Short-Circuiting Test | | 55°C 30mΩ | 5/5 OK (No Combustion) | 3/5 NG (Internal Combustion) |
| | N= 5 | | | |
| Thermal Test | | 4. 45V 150°C | 5/5 OK (No Combustion) | 2/5 NG |
| | N= 5 | | | (Internal Combustion) |

As shown in TABLE 1, in regard to the deficiency of the sealing of the upper part, the sealing deficiency occurred in 3 batteries out of 200 batteries in referential example, but there was no sealing deficiency in Example. The sealing deficiency of referential example was caused because the distance from the tab position to the back surface was long, variations in the bending angle of the tab and other factors in the production were cumulated, and the welding resin cannot be placed in a predetermined position. On the other hand, in Example, no sealing deficiency occurred because the distance from the tab position to the back surface is short and variation of the tab bending is low. Therefore, it was confirmed that Example can realize positioning of the tab with a higher precision, and higher reliability in comparison to the referential example.

With regard to the initial capacity, an average of 30 batteries was 3175 mAh for example and an average of 30 batteries was 3100 mAh for referential example. In Example, because the coating area of the mixture on the electrode plates can be increased with the change of the joining position of the tabs, the rated capacity can be significantly increased by 60 mAh in comparison to the referential example. The actually measured values showed the same tendency, and a large capacity increase was realized.

With regard to the shipping charge thickness, an average of 30 batteries was 4.62 mm for Example, and an average of 30 batteries was 4.69 mm for referential example. Because the batteries of Example have a smaller cumulative thickness (coating thickness, core thickness, tab thickness, tape thickness, laminate thickness) of the tab portion, the thickness of the battery was also smaller. With regard to the internal resistance, an average of 30 batteries was 15.3 mS2 for Example, and an average of 30 batteries was 32.7 mS2 for referential example. Because, in Example, the current can be effectively collected in the longitudinal direction because the fixation location of the tab was provided near the center of the electrode plate in the longitudinal direction, the internal resistance of Example can be halved in comparison to referential example, and a significant reduction of electric power loss was realized.

With regard to the cycle test at the room temperature, an average of the capacity maintaining rate was 89% for Example, and an average of the capacity maintaining rate was 86% for the referential example, which was lower than 89%. In addition, an average of the thickness of Example was 5.13 mm, and an average of the thickness of the referential example was 5.24 mm. Because the compression of the tab portion was smaller in Example, the battery of Example had an overall structure which does not tend to distort even when the flat-shape electrode assembly repeats expansion and contraction with the charging and discharging. Thus, capacity degradation was suppressed and the thickness was reduced.

With regard to the external short-circuiting test, combustion was observed in 3 batteries among 5 batteries in the referential example, and there was no combustion in Example. Therefore, it was confirmed that the batteries of Example tend to not combust even when the batteries are short-circuited under a very severe condition, and has a superior degree of safety. It can be deduced that, while, in the referential example, the amount of heat generation continues to increase after short-circuiting, resulting in the internal combustion, in Example, because of the low internal resistance, the heat generation at the time of short-circuiting is suppressed, and there is no combustion.

With regard to the thermal test, combustion was observed in 2 batteries among 5 batteries in the referential example, and there was no combustion in Example. Thus, it was confirmed that, while short-circuiting and internal combustion tend to easily occur for the referential example because the separator deformed under the influence of the tab folding and the contraction was quickened, combustion can be prevented in Example even when the battery of Example is exposed to a very severe condition because the separator around the tab was not deformed and the time until short-circuiting could be elongated.

In comparison to the referential example, in Example, no sealing deficiency was observed, and sealing reliability was improved. In addition, in comparison to the referential example, in Example, the capacity was increased, the initial thickness and the thickness after charge and discharge cycles were reduced, and the capacity maintaining rate was improved. Further, in comparison to the referential example, in Example, the internal resistance was reduced, the degree of safety during external short-circuiting was significantly improved, deformation of the tip of the separator was suppressed, and the degree of safety under a high-temperature environment was significantly improved.

### [Structure of Battery of Present Disclosure and Operational Advantages]

As described, the battery 1 of the present disclosure includes the laminated film outer housing 5 formed by joining laminate film members, and the flat-shape electrode assembly 10 housed in the laminated film outer housing 5 and formed by winding the positive electrode 40 of the elongated shape and the negative electrode 50 of the elongated shape, which oppose each other with the separator 60 of the elongated shape therebetween, in the flat shape. The positive electrode 40 includes the positive electrode core 41 of the elongated shape, and the positive electrode mixture layer 42 provided over the positive electrode core 41, and includes the positive electrode non-coated portion 46 at the midway in the longitudinal direction of the positive electrode, where the positive electrode mixture layer 42 is not present and the positive electrode core 41 is exposed. The negative electrode 50 includes the negative electrode core 51 of the elongated shape, and the negative electrode mixture layer 52 provided over the negative electrode core 51, and includes the negative electrode non-coated portion 56 at the midway in the longitudinal direction of the negative electrode, where the negative electrode mixture layer 52 is not present and the negative electrode core 51 is exposed. The battery 1 further includes the positive electrode tab 15 joined to and electrically connected to the positive electrode non-coated portion 46, and the negative electrode tab 20 joined to and electrically connected to the negative electrode non-coated portion 56. The positive electrode tab 15 and the negative electrode tab 20 are positioned on the same side with respect to the virtual plane Q which passes approximately the center of the flat-shape electrode assembly 10 in the thickness direction and which is approximately orthogonal to the thickness direction.

According to the present disclosure, because precise positioning of tabs 15 and 20 can be realized, sealing deficiency can be significantly reduced, and the sealing reliability can thus be improved. In addition, because the positive electrode tab 15 is fixed to the positive electrode non-coated portion 46 provided at the center portion side of the positive electrode 40 in such a manner that the positive electrode mixture layer 42 is present on both sides in the longitudinal direction of the positive electrode 40, the core exposed portion at the end of the positive electrode 40 on the winding start side can be removed or reduced. Similarly, because the negative electrode tab 20 is fixed to the negative electrode non-coated portion 56 provided on the center portion side of the negative electrode 50 in such a manner that the negative electrode mixture layer 52 is present on both sides in the longitudinal direction of the negative electrode 50, the core exposed portion at the end of the negative electrode 50 at the winding start side can be removed or reduced. Therefore, the capacity of the battery 1 can be significantly increased. In addition, because precise positioning of the tabs 15 and 20 can be realized, the distances between the tabs 15 and 20 and the back surface 9 of the laminated film outer housing 5 can be reduced, and interferences between the tabs 15 and 20 and the separator 60 can be approximately prevented. Therefore, deformation of the tip 69 of the separator 60 can be suppressed, short-circuiting prevention can be reliably realized, and the degree of safety can be significantly improved.

### [Desirable Structure of Battery to be employed and Operational Advantages]

The positive electrode tab 15 may have a thickness of less than the thickness of the positive electrode mixture layer 42, and the negative electrode tab 20 may have a thickness of less than the thickness of the negative electrode mixture layer 52.

According to the present configuration, the total thicknesses of the tabs 15 and 20, the welding portions thereof, and the insulating tapes 43 and 53 adhered to the intermittent coating portions can be more easily adjusted to a thickness approximately equal to the thicknesses of the mixture layers 42 and 52, respectively. Therefore, distortion does not tend to occur after the long-term charge/discharge cycles, high capacity maintaining rate can be easily realized, and high reliability can be more easily achieved.

Alternatively, the laminated film outer housing 5 may include a first portion 91 (refer to FIG. 3a) having the recess 6 which houses the flat-shape electrode assembly 10, a second portion 92 (refer to FIG. 3a) which is folded back at one-side end 57 (fold-back line) of the first portion 92 in the height direction, and having no recess, and welding portions provided on both sides of the recess 6 and on the other-side end in the height direction, and which seal the laminated film outer housing 5. The positive electrode tab 15 and the negative electrode tab 20 may be sandwiched by the first portion 91 and the second portion 92 at the other-side end in a state in which the laminated film outer housing 5 is sealed. The positive electrode tab 15 and the negative electrode tab 20 may protrude from the recess 6 from the side of the back surface portion 5a of the laminated film outer housing 5, approximately parallel to the back surface portion 5a.

According to the present configuration, occurrence of the flat portion 188 around the fold-back portion of the laminated film outer housing 5 can be prevented, and the volume of the electrode assembly housing portion 59 can be enlarged. Therefore, the flat-shape electrode assembly 10 of a large volume may be housed in the electrode assembly housing portion 59, and the capacity of the battery 1 can be significantly increased.

The present disclosure is not limited to the first embodiment and alternative configurations thereof, and various improvements and modifications are possible within the scope described in the claims and equivalences thereof of the present disclosure.

For example, in the first embodiment described above, the battery 1 includes the laminated film outer housing 5 including the recess 6 only on one side of the fold-back line 56 before the folding back, but alternatively, the battery of the present disclosure may include the laminated film outer housing 105 including the recess 106 on both sides of the fold-back line 157 before the folding back.

Alternatively, in the battery of the present disclosure, the positive electrode tab may have a thickness greater than or equal to the thickness of the positive electrode mixture layer. Alternatively, in the battery of the present disclosure, the negative electrode tab may have a thickness greater than or equal to the thickness of the negative electrode mixture layer.

In the battery 1 of the present disclosure, the negative electrode mixture layer 52 is present on a portion of the negative electrode 50 opposing, in the thickness direction, the positive electrode non-coated portion 46 to which the positive electrode tab 15 is joined, in the flat-shape electrode assembly 10. However, the negative electrode non-coated portion may be provided by not providing the negative electrode mixture layer on the portion of the negative electrode opposing, in the thickness direction, the positive electrode non-coated portion to which the positive electrode tab is joined, in the flat-shape electrode assembly, so as to reduce material cost of the negative electrode mixture layer.

### (Second Embodiment)

In the first embodiment of the present disclosure, a configuration has been described in which the positive electrode includes the positive electrode core of the elongated shape and the positive electrode mixture layer provided over the positive electrode core, and includes the positive electrode non-coated portion at the midway in the longitudinal direction of the positive electrode, where the positive electrode core is exposed, and the negative electrode includes the negative electrode core of the elongated shape and the negative electrode mixture layer provided over the negative electrode core, and includes the negative electrode non-coated portion at the midway in the longitudinal direction of the negative electrode, where the negative electrode core is exposed. In this configuration, the positive electrode tab is joined to the positive electrode non-coated portion, the negative electrode tab is joined to the negative electrode non-coated portion, and the positive electrode tab and the negative electrode tab are positioned at the same side with respect to a virtual plane which passes approximately the center of the flat-shape electrode assembly in the thickness direction and which is approximately orthogonal to the thickness direction of the flat-shape electrode assembly.

However, as will be described below, so long as the positive electrode includes the positive electrode non-coated portion at the midway in the longitudinal direction of the positive electrode, where the positive electrode core is exposed, and the positive electrode tab is joined to the positive electrode non-coated portion, the joining position of the negative electrode tab may be devised such that the positioning of the positive electrode tab may be more precisely performed, and the positioning of the negative electrode tab may be performed with precision of at least the same degree as the related art. Therefore, in comparison to the related art, an operational advantage may be realized in that the positioning of the positive electrode tab can be achieved with higher precision.

Further, in the configuration in which the positive electrode tab and the negative electrode tab are positioned on the same side with respect to the virtual plane which passes approximately the center of the flat-shape electrode assembly in the thickness direction and which is approximately orthogonal to the thickness direction of the flat-shape electrode assembly, the negative electrode tab may be joined at an outermost circumferential portion of the negative electrode core in the longitudinal direction, so as to achieve a significant operational advantage due to this structure, as will be described below. Alternatively, the negative electrode tab may be joined to an innermost circumferential portion of the negative electrode core in the longitudinal direction, so as to achieve a significant operational advantage due to this structure, as will be described below.

In a second embodiment of the present disclosure, a configuration will be described in which, in the configuration in which the positive electrode has the positive electrode non-coated portion at the midway in the longitudinal direction of the positive electrode, where the positive electrode core is exposed, and the positive electrode tab is joined to the positive electrode non-coated portion, the positive electrode tab and the negative electrode tab are positioned on the same side with respect to the virtual plane which passes approximately the center of the flat-shape electrode assembly in the thickness direction and which is approximately orthogonal to the thickness direction of the flat-shape electrode assembly, and further, the negative electrode tab is joined to the outermost circumferential portion of the negative electrode core in the longitudinal direction. In a third embodiment of the present disclosure, a configuration will be described in which, in the configuration in which the positive electrode includes the positive electrode non-coated portion at the midway in the longitudinal direction of the positive electrode, where the positive electrode core is exposed, and the positive electrode tab is joined to the positive electrode non-coated portion, the negative electrode tab is joined to the innermost circumferential portion of the negative electrode core in the longitudinal direction.

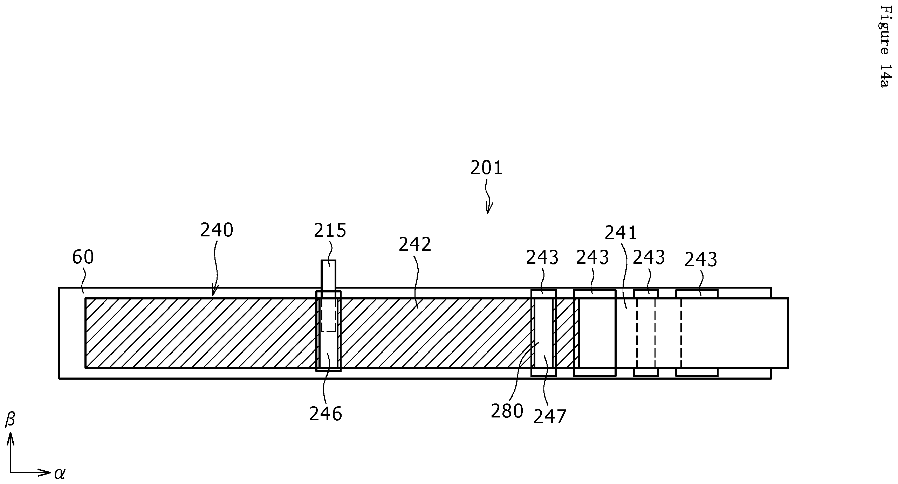

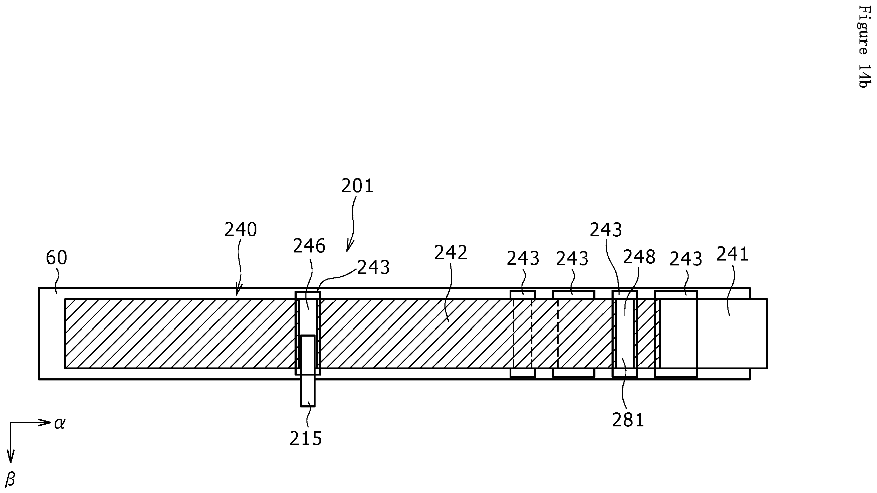

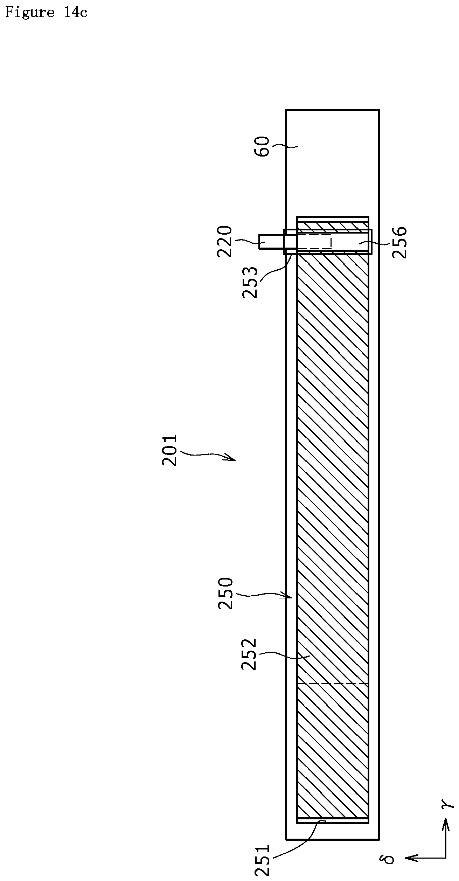

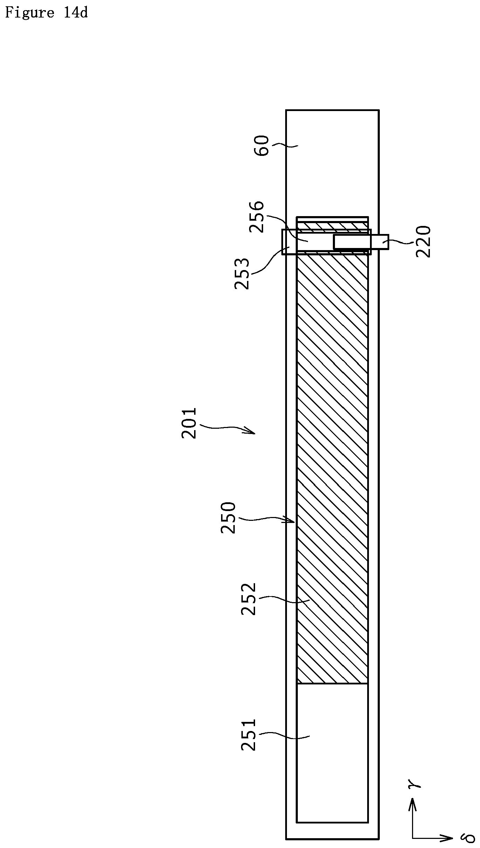

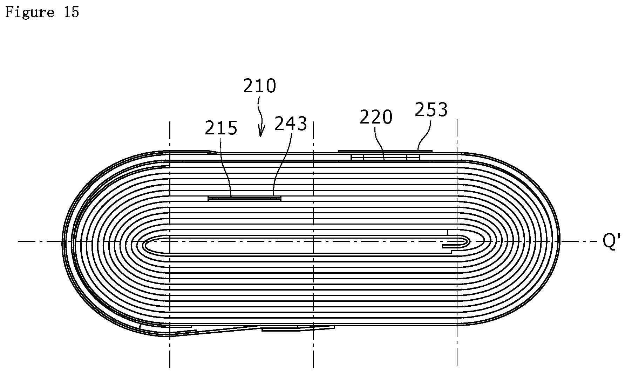

FIG. 14a is a schematic front view of a positive electrode 240 of an elongated shape before being wound in a non-aqueous electrolyte secondary battery 201 according to the second embodiment of the present disclosure, viewed from one side in the thickness direction thereof (an outer side in a radial direction of a flat-shape electrode assembly 210 (refer to FIG. 15)), and FIG. 14b is a schematic front view of the positive electrode 240 of the elongated shape before being wound, viewed from the other side in the thickness direction thereof (an inner side in the radial direction of the flat-shape electrode assembly 210). FIG. 14c is a schematic front view of a negative electrode 250 of an elongated shape before being wound in the non-aqueous electrolyte secondary battery 201, viewed from one side in a thickness direction thereof (the outer side in the radial direction of the flat-shape electrode assembly 210), and FIG. 14d is a schematic front view of the negative electrode 250 of the elongated shape before being wound, viewed from the other side in the thickness direction thereof (the inner side in the radial direction of the flat-shape electrode assembly 210).

Similar to the non-aqueous electrolyte secondary battery 1 according to the first embodiment of the present disclosure, the non-aqueous electrolyte secondary battery 201 according to the second embodiment has an outer appearance shown in FIGs. 1 and 2, and may be produced using the outer housing described above with reference to FIGs. 3a and 3b or using the outer housing described above with reference to FIGs. 8a and 8b. In FIGs. 14a, 14b, 14c, and 14d, the lengths of the positive electrode 240 and the negative electrode 250 in the longitudinal direction are drawn significantly shorter than the actual lengths. Further, in the second through fourth embodiments also, similar to the first embodiment, the α direction refers to the longitudinal direction of the positive electrodes 240, 340, and 440 of the elongated shape, and the arrow in the α direction indicates a direction from the winding start side to the winding completion side. The β direction refers to the width direction (short side direction) of the positive electrodes 240, 340, and 440 of the elongated shape. The γ direction refers to the longitudinal direction of the negative electrodes 250, 350, and 450 of the elongated shape, and the arrow in the γ direction indicates a direction from the winding start side to the winding completion side. The δ direction shows the width direction (short side direction) of the negative electrodes 250, 350, and 450 of the elongated shape. The α direction is orthogonal to the β direction, and the γ direction is orthogonal to the δ direction.

As shown in FIGs. 14a and 14b, the positive electrode 240 includes a positive electrode core 241 of an elongated shape, and a positive electrode mixture layer 242 partially and selectively provided over both surfaces of the positive electrode core 241 in the α direction. The positive electrode 240 includes positive electrode non-coated portions 246, 247, and 248 at a midway in the longitudinal direction, where the positive electrode mixture layer is not coated and the positive electrode core 241 is exposed over an entire region in the β direction. On both sides of each of the positive electrode non-coated portions 246, 247, and 248 in the α direction, the positive electrode mixture layer 242 is present.

A length of the first positive electrode non-coated portion 246 in the α direction is slightly longer than a length of a positive electrode tab 215 in the α direction, and the positive electrode tab 215 is joined through spot welding to a center portion of the first positive electrode non-coated portion 246 in the α direction. The first positive electrode non-coated portion 246 is a non-coated portion where the positive electrode mixture layer is not coated over either surface of the positive electrode core 241. The two first positive electrode non-coated portions 246 are provided at approximately the same location in the α direction. The second positive electrode non-coated portion 247 is present on a side surface facing an outer side in a radial direction shown in FIG. 14a, with a spacing in the α direction with respect to the first positive electrode non-coated portion 246. The third positive electrode non-coated portion 248 is present on a side surface facing an inner side in the radial direction shown in FIG. 14b, with a spacing in the α direction with respect to the second positive electrode non-coated portion 247. The second and third positive electrode non-coated portions 247 and 248 are present at locations nearer to the winding end side in the α direction than the first positive electrode non-coated portion 246.

A length, in the α direction, of each of the second and third positive electrode non-coated portions 247 and 248 is longer than or equal to a length, in the γ direction, of a negative electrode non-coated portion 256 (refer to FIGs. 14c and 14d) to be described below, and is desirably longer than this length of the negative electrode non-coated portion 256 in the γ direction. A length of a negative electrode core 251 in the δ direction is longer than a length of the positive electrode core 241 in the β direction. Of the portions of the flat-shape electrode assembly 210, portions other than the ends of the negative electrode non-coated portion 256 in the height direction (that is, the Z direction) oppose the second positive electrode non-coated portion 247 in the thickness direction (the thickness direction of the flat-shape electrode assembly 210), and also oppose the third positive electrode non-coated portion 248 in the thickness direction. Alternatively, the length, in the α direction, of each of the second and third positive electrode non-coated portions 247 and 248 may be shorter than the length of the negative electrode non-coated portion 256 in the γ direction.

Because the flat-shape electrode assembly 210 is produced by press-molding a wound electrode assembly in a flat shape, the flat-shape electrode assembly 210 tends to become highly dense in the thickness direction. Therefore, if the positive electrode mixture layer, which is on the side for discharging the lithium ions, is present at a position opposing, in the thickness direction, the negative electrode non-coated portion 256 where the negative electrode core 251 is exposed, lithium may react with the negative electrode at the periphery, and may excessively precipitate over the negative electrode, possibly resulting in short-circuiting in the worst case scenario. Thus, in the present embodiment, the second and third positive electrode non-coated portions 247 and 248 are provided at positions on the positive electrode 240 opposing the negative electrode non-coated portion 256 in the thickness direction, in the flat-shape electrode assembly 210, so as to eliminate the reacting portion of the positive and negative electrodes, to thereby reliably prevent short-circuiting and realize a high degree of safety.

Over the entire regions of the first through third positive electrode non-coated portions 246, 247, and 248 and locations, at ends of the positive electrode mixture layer 242 in the α direction, opposing the negative electrode 250 with the separator therebetween in the flat-shape electrode assembly 210, an insulating tape 243 is adhered. The insulating tape 243 is formed from an insulating material such as polyimide. At a boundary between a location where the positive electrode mixture layer 242 is present and a location where the positive electrode mixture layer 242 is not present, a step is caused corresponding to the thickness of the positive electrode mixture layer 242. At such a location, when an external force is coated to the battery 201, for example, when the battery 201 is erroneously fallen, the positive electrode mixture may be slipped out, and the slipped-out positive electrode mixture may cause short-circuiting. The insulating tape 243 is adhered in order to suppress such short-circuiting. A length, in the α direction, of the tape 243 adhered to the positive electrode non-coated portions 247 and 248 is longer than the length of the negative electrode non-coated portion 256 in the γ direction.

A material of the positive electrode core 241 is identical to the material of the positive electrode core 41 in the first embodiment, and a material of the positive electrode mixture layer 242 is identical to the material of the positive electrode mixture layer 42 in the first embodiment. The first through third positive electrode non-coated portions 246, 247, and 248 are formed by intermittently applying the positive electrode mixture over both surfaces of the positive electrode core 241. The first through third positive electrode non-coated portions 246, 247, and 248 can be produced through a method similar to that for the first through third positive electrode non-coated portions 46, 47, and 48 in the first embodiment.

As shown in FIGs. 14c and 14d, the negative electrode 250 includes the negative electrode core 251 of an elongated shape, and a negative electrode mixture layer 252 partially and selectively provided over both surfaces of the negative electrode core 251 in the γ direction. The negative electrode 250 includes the negative electrode non-coated portion 256 at an end near the winding completion side in the γ direction, where the negative electrode mixture layer is not coated and the negative electrode core 251 is exposed over an entire region in the δ direction. The negative electrode non-coated portion 256 is present at an outermost circumferential portion of the negative electrode 250. On both sides of the negative electrode non-coated portion 256 in the γ direction, the negative electrode mixture layer 252 is present. The length of the negative electrode non-coated portion 256 in the γ direction is slightly longer than a length of a negative electrode tab 220 in the γ direction, and the negative electrode tab 220 is joined through spot welding to a center portion of the negative electrode non-coated portion 256 in the γ direction. After the negative electrode tab 220 is joined, the insulating tape 253 is adhered over the entire region of the negative electrode non-coated portion 256. The negative electrode non-coated portion 256 is provided over both surfaces. The two negative electrode non-coated portions 256 are provided at approximately the same location in the γ direction, and have approximately an equal length in the γ direction.

A material of the negative electrode core 251 is identical to the material of the negative electrode core 51 of the first embodiment, and a material of the negative electrode mixture layer 252 is identical to the material of the negative electrode mixture layer 52 of the first embodiment. The negative electrode non-coated portion 256 is formed by intermittently applying the negative electrode mixture over both surfaces of the negative electrode core 251. The negative electrode 250 and the negative electrode non-coated portion 256 can be produced by a method similar to that for the negative electrode 50 and the negative electrode non-coated portion 56 of the first embodiment. In FIGs. 14a, 14b, 14c, and 14d, a quadrangular frame at an outer side shows an outer edge of the separator 60 of the elongated shape. A size of the separator 60 of the elongated shape in the width direction is longer than a size of the positive electrode core 241 of the elongated shape in the β direction, and is longer than a size of the negative electrode core 251 of the elongated shape in the δ direction, so as to reliably prevent short-circuiting.

FIG. 15 is a plan view of the flat-shape electrode assembly 210 according to the second embodiment, viewed from one side in the Z direction. With reference to FIGs. 14a, 14b, 14c, 14d, and 15, a total thickness of the positive electrode tab 215, the welding portion thereof, and the insulating tape adhered to the positive electrode non-coated portion 246 (non-coating over both surfaces) is approximately equal to a thickness of the positive electrode mixture layer 242. A total thickness of each of the positive electrode non-coated portions 247 and 248 (non-coating over one surface) opposing the negative electrode tab 220 and the insulating tape 243 is approximately equal to that of the positive electrode mixture layer 242. The negative electrode non-coated portion 256 to which the negative electrode tab 220 is joined is present at the outermost circumferential portion of the negative electrode 250. Desirably, a thickness of the negative electrode tab 220 is thinner than the thickness of the negative electrode mixture layer 252. Opposing locations of the positive electrode 240, opposing the negative electrode tab 220 include core exposed portions 280 and 281 at which the positive electrode core 241 is exposed (the positive electrode non-coated portions 247 and 248).

As shown in FIG. 15, the positive electrode tab 215 and the negative electrode tab 220 are positioned on the same side with respect to a virtual plane Q' which passes approximately the center of the flat-shape electrode assembly 210 in the thickness direction and which is approximately orthogonal to the thickness direction. As the range of presence of the positive electrode tab 215 in the flat-shape electrode assembly 210, there may be employed a range identical to the range of presence of the positive electrode tab 15 in the flat-shape electrode assembly 10 described above using the variable t with reference to FIG. 5.

According to the second embodiment of the present disclosure, the positive electrode tab 215 and the negative electrode tab 220 are positioned on the same side with respect to the virtual plane Q' which passes approximately the center of the flat-shape electrode assembly 210 in the thickness direction and which is approximately orthogonal to the thickness direction of the flat-shape electrode assembly 210, and the negative electrode tab 220 is joined to the outermost circumferential portion of the negative electrode core 251. Therefore, with reference to FIG. 6, the negative electrode tab 220 (not shown in FIG. 6) may be extended in the Z direction from a position nearer to the back surface 9 than the negative electrode tab 20 in the first embodiment. Thus, in comparison to the negative electrode tab 20, the interference of the negative electrode tab 220 with the separator 60 may be further suppressed, and the positioning of the negative electrode tab 220 may be performed with a higher precision than the negative electrode tab 20 and the positive electrode tab 115. In addition, because the negative electrode tab 220 is joined to the outermost circumferential portion of the negative electrode core 251, in comparison to the configuration in which the negative electrode tab 220 is joined to the center portion of the flat-shape electrode assembly 210 in the thickness direction, the stress (distortion) caused in the flat-shape electrode assembly 210 by the joining of the negative electrode tab 220 can be reduced. Therefore, the degradation of the flat-shape electrode assembly 210 when the battery 201 is continuously used over a long period of time can be suppressed.

### (Third Embodiment)

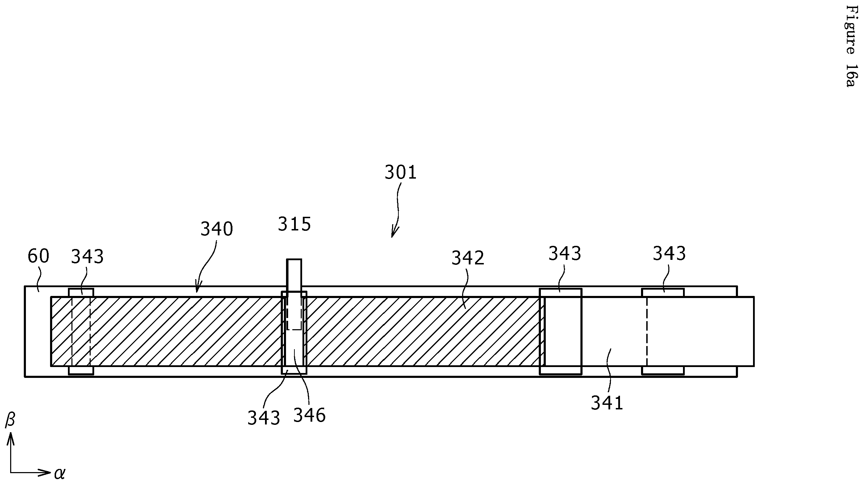

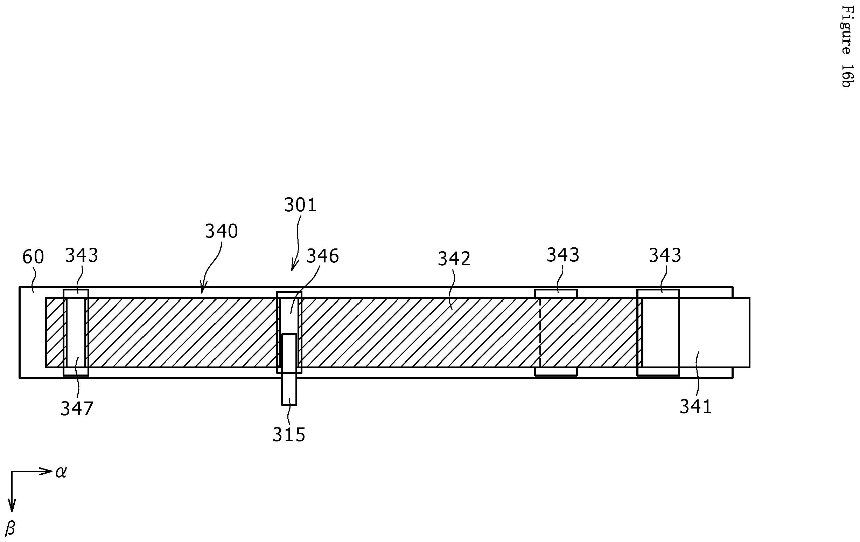

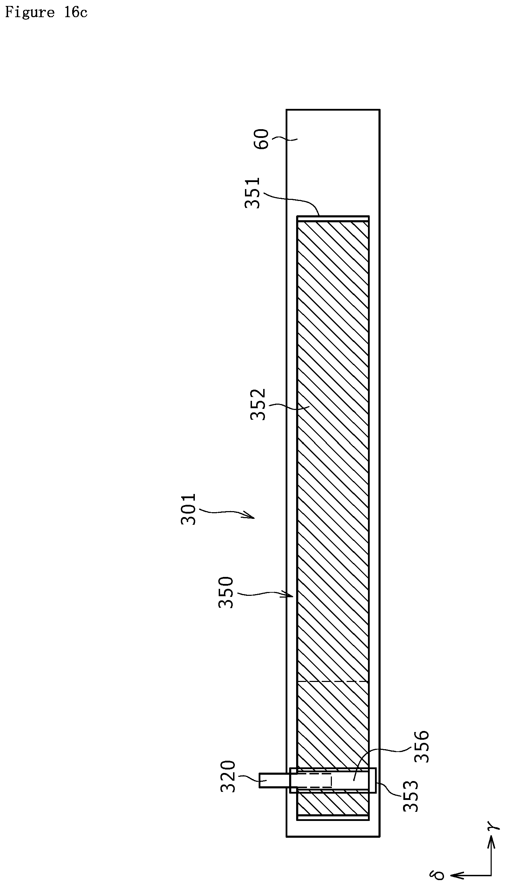

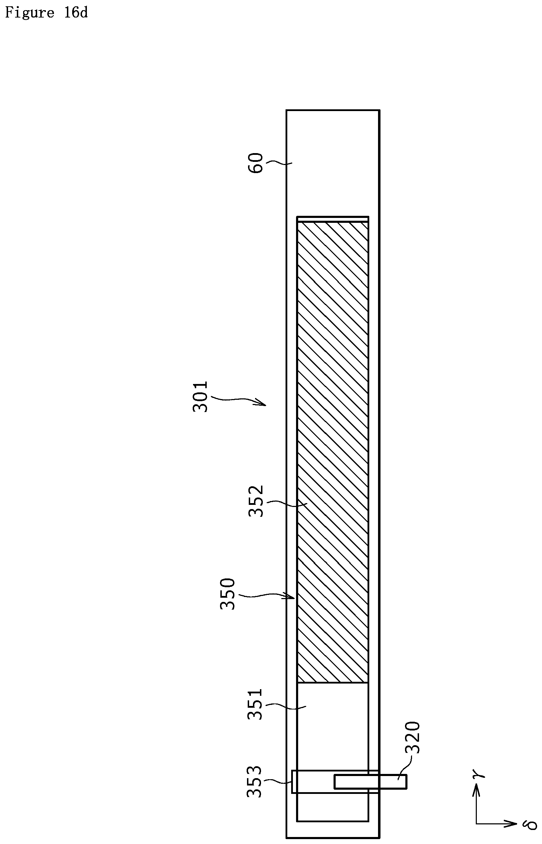

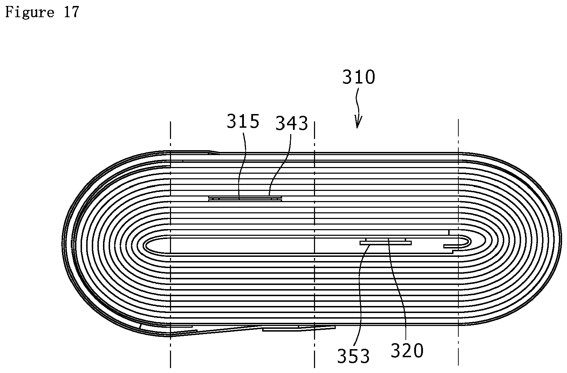

FIG. 16a is a schematic front view of a positive electrode 340 of an elongated shape before being wound, in a non-aqueous electrolyte secondary battery 301 according to the second embodiment of the present disclosure, viewed from one side in a thickness direction thereof (an outer side in a radial direction of a flat-shape electrode assembly 310 (refer to FIG. 17)), and FIG. 16b is a schematic front view of the positive electrode 340 of the elongated shape before being wound, viewed from the other side in the thickness direction thereof (an inner side in the radial direction of the flat-shape electrode assembly 310). FIG. 16c is a schematic front view of a negative electrode 350 of an elongated shape before being wound, in the non-aqueous electrolyte secondary battery 301, viewed from one side in a thickness direction thereof (the outer side in the radial direction of the flat-shape electrode assembly 310), and FIG. 16d is a schematic front view of the negative electrode 350 of the elongated shape before being wound, viewed from the other side in the thickness direction thereof (the inner side in the radial direction of the flat-shape electrode assembly 310).

Similar to the non-aqueous electrolyte secondary battery 1 according to the first embodiment of the present disclosure, the non-aqueous electrolyte secondary battery 301 according to the third embodiment of the present disclosure has an outer appearance as shown in FIGs. 1 and 2, and may be produced using the outer housing described above with reference to FIGs. 3a and 3b or using the outer housing described above with reference to FIGs. 8a and 8b. In FIGs. 16a, 16b, 16c, and 16d, lengths of the positive electrode 340 and the negative electrode 350 are drawn significantly shorter than the actual lengths.

As shown in FIGs. 16a and 16b, the positive electrode 340 includes a positive electrode core 341 of an elongated shape, and a positive electrode mixture layer 342 partially and selectively provided over both surfaces of the positive electrode core 341 in the α direction. The positive electrode 340 includes positive electrode non-coated portions 346 and 347 at a midway in a longitudinal direction of the positive electrode 340, where the positive electrode mixture layer is not coated and the positive electrode core 341 is exposed over an entire region in the β direction. The positive electrode mixture layer 342 is present on both sides, in the α direction, of each of the positive electrode non-coated portions 346 and 347.

A length of the first positive electrode non-coated portion 346 in the α direction is slightly longer than a length of a positive electrode tab 315 in the α direction, and the positive electrode tab 315 is joined through spot welding to a center portion of the first positive electrode non-coated portion 346 in the α direction. The first positive electrode non-coated portion 346 is a non-coated portion in which the positive electrode mixture layer is not coated over either surface of the positive electrode core 351. The two first positive electrode non-coated portions 346 are provided at approximately the same location in the α direction. The second positive electrode non-coated portion 347 is present on a side surface facing an inner side in a radial direction shown in FIG. 16b, with a spacing in the α direction with respect to the first positive electrode non-coated portion 346, and at a location nearer to the winding start side in the α direction than the first positive electrode non-coated portion 346.

A length of the second positive electrode non-coated portion 347 in the α direction is greater than or equal to a length, in the γ direction, of a negative electrode non-coated portion 356 (refer to FIGs. 16c and 16d) to be described below, and is desirably longer than this length of the negative electrode non-coated portion 356 in the γ direction. A length of a negative electrode core 351 in the δ direction is longer than a length of the positive electrode core 341 in the β direction. Of the flat-shape electrode assembly 310 (refer to FIG. 17), portions other than the ends in a height direction of the negative electrode non-coated portion 356 (that is, the Z direction) oppose the second positive electrode non-coated portion 347 in the thickness direction (a thickness direction of the flat-shape electrode assembly 310). Alternatively, the length of the second positive electrode non-coated portion 347 in the α direction may be shorter than the length of the negative electrode non-coated portion 356 in the γ direction.

Because the flat-shape electrode assembly 310 is produced by press-molding a wound electrode assembly in a flat shape, the flat-shape electrode assembly 310 tends to become highly dense in the thickness direction. Therefore, when a positive electrode mixture layer, which is on the side for discharging lithium ions, is present at a position opposing, in the thickness direction, the negative electrode non-coated portion 356 at which the negative electrode core 351 is exposed, lithium may react with the negative electrode at the periphery, and may excessively precipitate over the negative electrode, possibly resulting in short-circuiting in the worst case scenario. Therefore, in the present embodiment, the second positive electrode non-coated portion 347 is provided on the positive electrode 340 at a position opposing the negative electrode non-coated portion 356 in the thickness direction in the flat-shape electrode assembly 310, so as to eliminate the reacting portion of the positive and negative electrodes, and to thereby reliably prevent short-circuiting and realize a high degree of safety.

Over the entire region of the first and second positive electrode non-coated portions 346 and 347, and locations, at ends of the positive electrode mixture layer 342 in the α direction, opposing the negative electrode 350 with the separator therebetween in the flat-shape electrode assembly 310, an insulating tape 343 is adhered. The insulating tape 343 is formed from an insulating material such as polyimide. At a boundary between a location where the positive electrode mixture layer 342 is present and a location where the positive electrode layer 342 is not present, a step is caused corresponding to the thickness of the positive electrode mixture layer 342. In such a location, when an external force is coated to the battery 301, for example, when the battery 301 is erroneously fallen, the positive electrode mixture may be slipped out, and the slipped-out positive electrode mixture may cause short-circuiting. The insulating tape 343 is adhered to suppress such short-circuiting. A length, in the α direction, of the tape 343 adhered to the positive electrode non-coated portions 347 and 348 is longer than the length of the negative electrode non-coated portion 356 in the γ direction.

A material of the positive electrode core 341 is identical to the material of the positive electrode core 41 of the first embodiment, and a material of the positive electrode mixture layer 342 is identical to the material of the positive electrode mixture layer 42 of the first embodiment. The first and second positive electrode non-coated portions 246 and 247 are formed by intermittently applying the positive electrode mixture over both surfaces of the positive electrode core 241. The first and second positive electrode non-coated portions 246 and 247 may be produced through a method similar to that for the first through third positive electrode non-coated portions 46, 47, and 48 of the first embodiment.

As shown in FIGs. 16c and 16d, the negative electrode 350 includes the negative electrode core 351 of an elongated shape, and a negative electrode mixture layer 352 partially and selectively provided over both surfaces of the negative electrode core 351 in the γ direction. The negative electrode 350 includes the negative electrode non-coated portion 356 at an end in a winding start side in the γ direction on a side surface on an inner side in the radial direction, where the negative electrode mixture layer is not coated and the negative electrode core 351 is exposed over an entire region in the δ direction. The negative electrode non-coated portion 356 is present at an innermost circumferential portion of the negative electrode 350. The negative electrode mixture layer 352 is present on both sides of the negative electrode non-coated portion 356 in the γ direction. The length of the negative electrode non-coated portion 356 in the γ direction is slightly longer than a length of a negative electrode tab 320 in the γ direction, and the negative electrode tab 320 is joined through spot welding to a center portion of the negative electrode non-coated portion 356 in the γ direction. After the negative electrode tab 320 is joined, the insulating tape 353 is adhered over the entire region of the negative electrode non-coated portion 356.

A material of the negative electrode core 351 is identical to the material of the negative electrode core 51 of the first embodiment, and a material of the negative electrode mixture layer 352 is identical to the material of the negative electrode mixture layer 52 of the first embodiment. The negative electrode non-coated portion 356 is formed by intermittently applying the negative electrode mixture over the side surface of the negative electrode core 351 on an inner side in the radial direction. The negative electrode 350 and the negative electrode non-coated portion 356 may be produced through a method similar to that for the negative electrode 50 and the negative electrode non-coated portion 56 of the first embodiment. In FIGs. 16a, 16b, 16c, and 16d, a quadrangular frame at an outer side shows an outer edge of the separator 60 of the elongated shape. A size, in the width direction, of the separator 60 of the elongated shape is longer than a size, in the β direction, of the positive electrode core 341 of the elongated shape, and longer than a size, in the δ direction, of the negative electrode 351 of the elongated shape, so as to reliably prevent short-circuiting.

FIG. 17 is a plan view of the flat-shape electrode assembly 310 according to the third embodiment, viewed from one side in the Z direction. With reference to FIGs. 16a, 16b, 16c, 16d, and 17, a total thickness of the positive electrode tab 315, the welding portion thereof, and the insulating tape 343 adhered to the positive electrode non-coated portion 346 (non-coating over both surfaces) is approximately equal to the thickness of the positive electrode mixture layer 342. A total thickness of the positive electrode non-coated portion 347 (non-coating over one surface) opposing the negative electrode tab 320 and the insulating tape 343 is approximately equal to that of the positive electrode mixture layer 342. The negative electrode non-coated portion 356 to which the negative electrode tab 320 is joined is present at the innermost circumferential portion of the negative electrode 350. Desirably, the thickness of the negative electrode tab 320 is thinner than the thickness of the negative electrode mixture layer 352. Opposing locations of the positive electrode 340, opposing the negative electrode tab 320 include a core exposed portion 280 in which the positive electrode core 341 is exposed. As a range of presence of the positive electrode tab 315 in the flat-shape electrode assembly 310, there may be employed a range identical to the range of presence of the positive electrode tab 15 in the flat-shape electrode assembly 10, described above using a variable t with reference to FIG. 5.

According to the third embodiment, as shown in FIG. 17, the negative electrode tab 220 is joined to the innermost circumferential portion of the negative electrode core 251, at an inner side in the radial direction. Therefore, the positive electrode portions opposing the negative electrode tab 220 may be reduced from the two positive electrode non-coated portions in the first and second embodiments to one positive electrode non-coated portion 347. As a result, a region, in the α direction, in the positive electrode core 341, over which the positive electrode mixture layer 342 is provided, may be enlarged. Thus, the capacity of the battery 301 can be increased. Furthermore, because the negative electrode tab 320 is joined to the innermost circumferential portion of the negative electrode core 351, in comparison to the configuration in which the negative electrode tab 320 is joined to the center portion of the flat-shape electrode assembly 310 in the thickness direction, the stress (distortion) caused in the flat-shape electrode assembly 310 due to the joining of the negative electrode tab 320 can be reduced. Therefore, the degradation of the flat-shape electrode assembly 310 when the battery 301 is continuously used for a long period of time can be suppressed.

### (Fourth Embodiment)

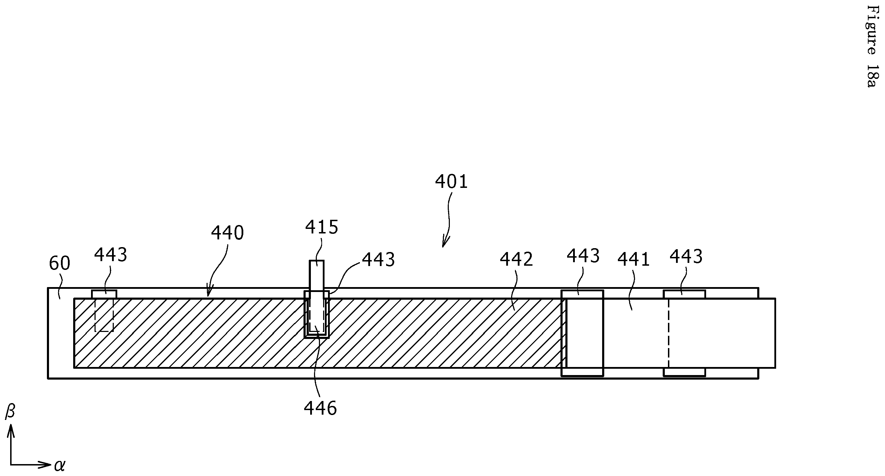

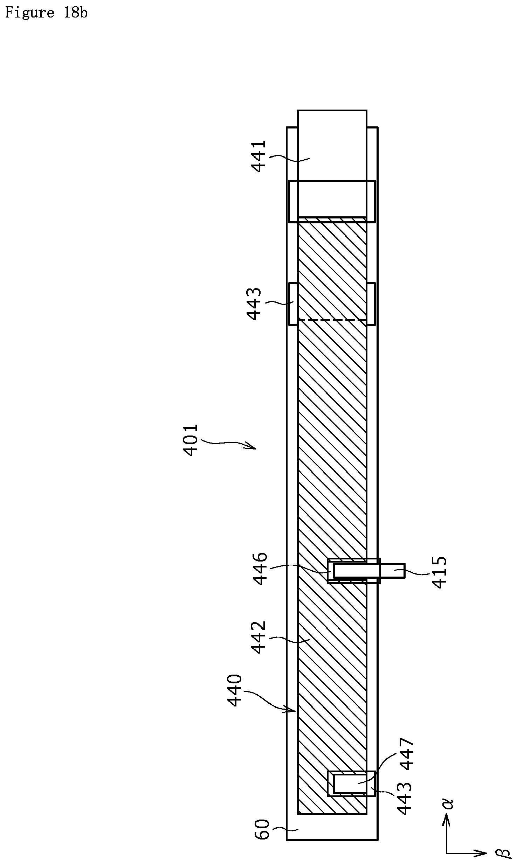

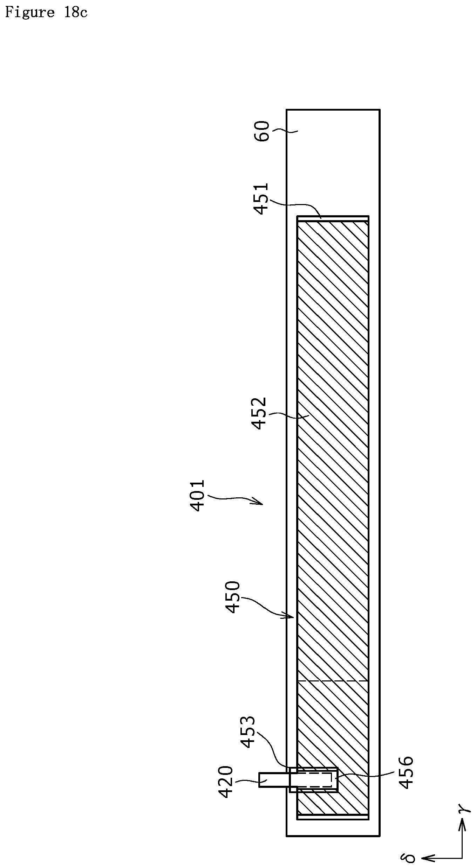

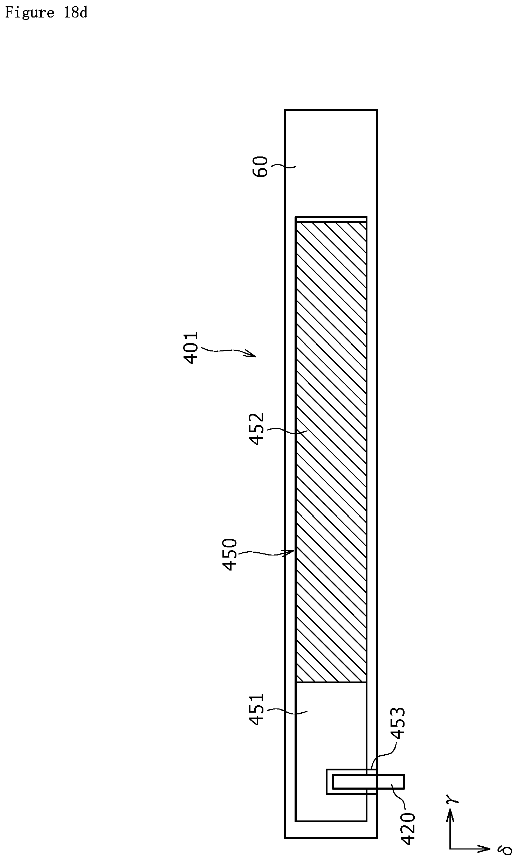

FIG. 18a is a schematic front view of a positive electrode 440 of an elongated shape before being wound, in a non-aqueous electrolyte secondary battery 401 according to a fourth embodiment of the present disclosure, viewed from one side in a thickness direction thereof (an outer side in a radial direction of the flat-shape electrode assembly), and FIG. 18b is a schematic front view of the positive electrode 440 of the elongated shape before being wound, viewed from the other side in the thickness direction thereof (an inner side in the radial direction of the flat-shape electrode assembly). FIG. 18c is a schematic front view of a negative electrode 450 of an elongated shape before being wound, in the non-aqueous electrolyte secondary battery 401, viewed from one side in a thickness direction thereof (the outer side in the radial direction of the flat-shape electrode assembly), and FIG. 18d is a schematic front view of the negative electrode 450 of the elongated shape before being wound, viewed from the other side in the thickness direction thereof (the inner side in the radial direction of the flat-shape electrode assembly).

Similar to the non-aqueous electrolyte secondary battery 1 of the first embodiment, the non-aqueous electrolyte secondary battery 401 of the fourth embodiment has an outer appearance shown in FIGs. 1 and 2, and may be produced using the outer housing described above with reference to FIGs. 3a and 3b, or using the outer housing described above with reference to FIGs. 8a and 8b. In FIGs. 18a, 18b, 18c, and 18d, lengths of the positive electrode 440 and the negative electrode 450 in the longitudinal direction are drawn significantly shorter than the actual lengths.

As shown in FIGs. 18a and 18b, the positive electrode 440 includes a positive electrode core 441 of an elongated shape, and a positive electrode mixture layer 442 partially and selectively provided over both surfaces of the positive electrode core 441 in the α direction. The positive electrode 440 includes positive electrode non-coated portions 446 and 447 at a midway in a longitudinal direction of the positive electrode 440, where the positive electrode mixture layer is not coated and the positive electrode core 441 is exposed over an entire region in the β direction. The positive electrode mixture layer 442 is present on both sides, in the α direction, of each of the positive electrode non-coated portions 446 and 447. The first positive electrode non-coated portion 446 is a non-coated portion in which the positive electrode mixture layer is not coated over either surface of the positive electrode core 415. The two first positive electrode non-coated portions 446 are provided at approximately the same location in the α direction. The second positive electrode non-coated portion 447 is present on a side surface facing an inner side in the radial direction shown in FIG. 18b, with a spacing in the α direction with respect to the first positive electrode non-coated portion 446, and on a location nearer to the winding start side in the α direction than the first positive electrode non-coated portion 446.

A length of the second positive electrode non-coated portion 447 in the α direction is longer than or equal to a length, in the γ direction, of a negative electrode non-coated portion 456 (refer to FIGs. 18c and 18d) to be described below, and is desirably longer than this length of the negative electrode non-coated portion 456 in the γ direction. A length of the second positive electrode non-coated portion 447 in the β direction is a longer than or equal to a length, in the δ direction, of the negative electrode non-coated portion 456 (refer to FIGs. 18c and 18d) to be described below, and is desirably longer than this length of the negative electrode non-coated portion 456 in the δ direction. A length of a negative electrode core 451 in the δ direction is longer than a length of the positive electrode core 441 in the β direction. Of the flat-shape electrode assembly, portions other than a one-side end in a height direction of the negative electrode non-coated portion 456 (that is, the Z direction) oppose the second positive electrode non-coated portion 447 in the thickness direction (the thickness direction of the flat-shape electrode assembly). Alternatively, the length of the second positive electrode non-coated portion 447 in the α direction may be shorter than the length of the negative electrode non-coated portion 456 in the γ direction. The length of the second positive electrode non-coated portion 447 in the β direction may be shorter than the length of the negative electrode non-coated portion 456 in the δ direction. Over the entire region of the first and second positive electrode non-coated portions 446 and 447, and locations, at ends of the positive electrode mixture layer 442 in the α direction, opposing the negative electrode 450 with the separator therebetween in the flat-shape electrode assembly, an insulating tape 443 is adhered. The insulating tape 443 is formed from an insulating material such as polyimide. Lengths, in the α direction and in the β direction, of the tape 443 adhered to the positive electrode non-coated portion 447 are respectively longer than the lengths of the negative electrode non-coated portion 456 in the γ direction and in the δ direction.

As shown in FIGs. 18c and 18d, the negative electrode 450 includes the negative electrode core 451 of an elongated shape, and a negative electrode mixture layer 452 partially and selectively provided over both surfaces of the negative electrode core 451 in the γ direction. The negative electrode 450 includes the negative electrode non-coated portion 456, on a side surface at an inner side in the radial direction, at an end near the winding start side in the γ direction, where the negative electrode mixture layer is not coated and the negative electrode core 451 is exposed over an entire region in the δ direction. The negative electrode non-coated portion 456 is present at the innermost circumferential portion of the negative electrode 450. The negative electrode mixture layer 452 is present on both sides of the negative electrode non-coated portion 456 in the γ direction. A length of the negative electrode non-coated portion 456 in the γ direction is slightly longer than a length of a negative electrode tab 420 in the γ direction, and the negative electrode tab 420 is joined through spot welding on a center portion of the negative electrode non-coated portion 456 in the γ direction. After the negative electrode tab 420 is joined, the insulating tape 453 is adhered over the entire region of the negative electrode non-coated portion 456.

As shown in FIGs. 18a, 18b, 18c, and 18d, the non-aqueous electrolyte secondary battery 401 according to the fourth embodiment differs from the non-aqueous electrolyte secondary battery 301 according to the third embodiment only in that the first and second positive electrode non-coated portions 446 and 447 are present not over the entire region in the β direction, but only over a part in the β direction, and in that the negative electrode non-coated portion 456 is present not over the entire region in the δ direction, but only over a part in the δ direction. According to the fourth embodiment, because the areas for the formation regions of the positive electrode mixture layer 442 and the negative electrode mixture layer 452 can be increased, the capacity of the non-aqueous electrolyte secondary battery 401 can be increased.

Alternatively, a configuration may be employed which differs from the first and second embodiments only in that the first through third positive electrode non-coated portions are present not over the entire region in the β direction but only over a part in the β direction, and in that the negative electrode non-coated portion is present not over the entire region in the δ direction, but only in a part in the δ direction. In such a configuration also, the areas of the formation region of the positive electrode mixture layer and the formation region of the negative electrode mixture layer can be increased, and the capacity of the non-aqueous electrolyte secondary battery can be increased.

### [Test Results]

The present inventors have performed tests similar to the tests for the first embodiment, for the batteries 201, 301, and 401 according to the second through fourth embodiments, and obtained the following results shown in TABLE 2.

**[TABLE 2]**

| | | | Second Embodiment | Third Embodiment | Fourth Embodiment | First Embodiment |
|---|---|---|---|---|---|---|
| Initial Capacity N=30 | | | 3178mAh (3160~3195) | 3204mAh (3186~3220) | 3263mAh (3238~3271) | 3175mAh (3158~3190) |
| Shipping Charge Thickness N=30 | | | 4. 61 mm (4. 61~4.64) | 4. 59 mm (4. 58~4.63) | 4. 59 mm (4.57~4.63) | 4. 62 mm (4. 61 ~4.64) |
| Internal Resistance N=30 | | | 18. 7m Ω (18. 1~20.3) | 18. 5m Ω (17.9~20.1) | 18. 5m Ω (17.9~20.1) | 15. 3m Ω (14.9~15.8) |
| RT Cycle N=5 | | SOOth Capacity | 90% (89~90%) | 91% (90~91%) | 91% (90~92%) | 89% (88~90%) |
| | | 500th Thicknes | 5. 10 mm (5. 08~5.17) | 5. 08 mm (5. 05~5. 10) | 5. 04 mm (5. 01~5.08) | 5. 13 mm (5. 12~5.18) |
| External Short-Circuiting Test | | 55°C 30 mΩ | 5/5 OK (No Combustion ) | 5/5 OK (No Combustion ) | 5/5 OK (No Combustion ) | 5/5 OK (No Combustion ) |
| | N=5 | | | | | |
| Thermal Test | | 4.5V 15 | 5/5 OK (No Combustion ) | 5/5 OK (No Combustion ) | 5/5 OK (No Combustion ) | 5/5 OK (No Combustion ) |
| | N=5 | 0°C | | | | |

As shown in TABLE 2, in the second through fourth embodiments, in comparison to the first embodiment, the internal resistances were slightly larger due to the difference in the joining position of the negative electrode tab, but the degrees of safety were similar. On the other hand, in the second through fourth embodiment, in comparison to the first embodiment, the shipping charge thickness and the thickness after the cycle test were lower. This is due to the joining of the negative electrode tab at the outermost circumferential portion or the innermost circumferential portion of the negative electrode, resulting in a more uniform layering in the thickness direction at locations other than the joining position of the negative electrode tab. Further, as shown in TABLE 2, in the second through fourth embodiments, in comparison to the first embodiment, the distortion tends to not occur in the flat-shape electrode assembly, degradation of the flat-shape electrode assembly can be suppressed, and the capacity maintaining rate can be improved. In addition, when the negative electrode tab is joined to the outermost circumferential portion of the negative electrode as in the second embodiment, the bend-machining can be facilitated during sealing at the outer housing, resulting in improvement in productivity and reliability. Further, when the negative electrode tab is joined to the innermost circumferential portion of the negative electrode as in the third embodiment, the areas of the formation regions of the positive and negative electrode mixture layers can be increased, and the capacity can also be increased in comparison to the first embodiment. Moreover, when the intermittent non-coated portion for the attachment portion of the positive and negative electrode tab is limited to a part in the height direction as in the fourth embodiment, the areas of the formation regions of the positive and negative electrode mixture layers can be further increased from the third embodiment, and the capacity can be significantly increased.

### REFERENCE SIGNS LIST

1, 201, 301, 401 battery, 5 laminated film outer housing, 5a back surface portion, 6 recess, 9 back surface, 10 flat-shape electrode assembly, 15 positive electrode tab, 16 thermal welding portion of positive electrode tab, 20 negative electrode tab, 21 thermal welding portion of positive electrode tab, 25 positive electrode tab welding resin, 30 negative electrode tab welding resin, 40, 240, 340, 440 positive electrode, 41, 241, 341, 441 positive electrode core, 42, 242, 342, 442 positive electrode mixture layer, 43, 53, 243, 253, 343, 353, 443, 453 insulating tape, 46, 246, 346, 446 positive electrode non-coated portion, 50, 250, 350, 450 negative electrode, 51, 251, 351, 451 negative electrode core, 52, 252, 352, 452 negative electrode mixture layer, 56, 256, 356, 456 negative electrode non-coated portion, 57 fold-back line, 59 electrode assembly housing portion, 60 separator, 60a projected allowance of separator, 65 group of separators, 65a group of projected allowances, 69 tip of separator, 80 tab shaping apparatus, 83, 84, 280, 281 core exposed portion, 91 first portion, 92 second portion, 188 flat portion, Q, Q' virtual plane.

## Claims

1. A non-aqueous electrolyte secondary battery comprising:
a laminated film outer housing formed by joining film members; and
a flat-shape electrode assembly housed in the laminated film outer housing, and formed by winding a positive electrode of an elongated shape and a negative electrode of an elongated shape, which oppose each other with a separator of an elongated shape therebetween, in a flat shape, wherein
the positive electrode includes a positive electrode core of an elongated shape, and a positive electrode mixture layer provided over the positive electrode core, and includes a positive electrode non-coated portion at a midway in a longitudinal direction of the positive electrode, where the positive electrode mixture layer is not present and the positive electrode core is exposed, and the negative electrode includes a negative electrode core of an elongated shape, and a negative electrode mixture layer provided over the negative electrode core, and includes a negative electrode non-coated portion at a midway in a longitudinal direction of the negative electrode, where the negative electrode mixture layer is not present and the negative electrode core is exposed,
the non-aqueous electrolyte secondary battery further comprises: a positive electrode tab joined to and electrically connected to the positive electrode non-coated portion; and a negative electrode tab joined to and electrically connected to the negative electrode non-coated portion, and
the positive electrode tab and the negative electrode tab are positioned on a same side with respect to a virtual plane which passes approximately a center of the flat-shape electrode assembly in a thickness direction and which is approximately orthogonal to the thickness direction of the flat-shape electrode assembly.

2. A non-aqueous electrolyte secondary battery comprising:
a laminated film outer housing formed by joining film members; and
a flat-shape electrode assembly housed in the laminated film outer housing, and formed by winding a positive electrode of an elongated shape and a negative electrode of an elongated shape, which oppose each other with a separator of an elongated shape therebetween, in a flat shape, wherein
the positive electrode includes a positive electrode core of an elongated shape, and a positive electrode mixture layer provided over the positive electrode core, and includes a positive electrode non-coated portion at a midway in a longitudinal direction of the positive electrode, where the positive electrode mixture layer is not present and the positive electrode core is exposed, and the negative electrode includes a negative electrode core of an elongated shape, and a negative electrode mixture layer provided over the negative electrode core, and includes a negative electrode non-coated portion at an outermost circumferential portion in a longitudinal direction of the negative electrode, where the negative electrode mixture layer is not present and the negative electrode core is exposed,
the non-aqueous electrolyte secondary battery further comprises: a positive electrode tab joined to and electrically connected to the positive electrode non-coated portion; and a negative electrode tab joined to and electrically connected to the negative electrode non-coated portion, and
the positive electrode tab and the negative electrode tab are positioned on a same side with respect to a virtual plane which passes approximately a center of the flat-shape electrode assembly in a thickness direction and which is approximately orthogonal to the thickness direction of the flat-shape electrode assembly.

3. A non-aqueous electrolyte secondary battery comprising:
a laminated film outer housing formed by joining film members; and
a flat-shape electrode assembly housed in the laminated film outer housing, and formed by winding a positive electrode of an elongated shape and a negative electrode of an elongated shape, which oppose each other with a separator of an elongated shape therebetween, in a flat shape, wherein
the positive electrode includes a positive electrode core of an elongated shape, and a positive electrode mixture layer provided over the positive electrode core, and includes a positive electrode non-coated portion at a midway in a longitudinal direction of the positive electrode, where the positive electrode mixture layer is not present and the positive electrode core is exposed, and the negative electrode includes a negative electrode core of an elongated shape, and a negative electrode mixture layer provided over the negative electrode core, and includes a negative electrode non-coated portion at an innermost circumferential portion in a longitudinal direction of the negative electrode, where the negative electrode mixture layer is not present and the negative electrode core is exposed, and
the non-aqueous electrolyte secondary battery further comprises: a positive electrode tab joined to and electrically connected to the positive electrode non-coated portion; and a negative electrode tab joined to and electrically connected to the negative electrode non-coated portion.

4. The non-aqueous electrolyte secondary battery according to any one of claims 1 to 3, wherein
a thickness of the positive electrode tab is less than a thickness of the positive electrode mixture layer, and
a thickness of the negative electrode tab is less than a thickness of the negative electrode mixture layer.

5. The non-aqueous electrolyte secondary battery according to any one of claims 1 to 4, wherein
an opposing location, of the positive electrode, which opposes the negative electrode tab includes a core exposed portion where the positive electrode core is exposed.

6. The non-aqueous electrolyte secondary battery according to any one of claims 1 to 5, wherein
the positive electrode non-coated potion and the core exposed portion are present only at a part, in a width direction, of the positive electrode of the elongated shape, and
the negative electrode non-coated portion is present only at a part, in a width direction, of the negative electrode of the elongated shape.

7. The non-aqueous electrolyte secondary battery according to any one of claims 1 to 6, wherein
the film outer housing comprises:
a first portion including a recess which houses the flat-shape electrode assembly;
a second portion which is folded back at a one-side end in a height direction of the first portion and which does not have a recess; and
a welding portion provided on both sides of the recess and on the other-side end in the height direction, and which seals the laminated film outer housing,
the positive electrode tab and the negative electrode tab are sandwiched by the first portion and the second portion at the other-side end in a state in which the laminated film outer housing is sealed, and
each of the positive electrode tab and the negative electrode tab protrudes from the welding portion, from a back surface portion side of the laminated film outer housing, approximately in parallel to the back surface portion.
